(19) Europäisches Patentamt
European Patent Office
Office européen des brevets

(11) **EP 4 661 583 A1**

(12) **EUROPEAN PATENT APPLICATION**
published in accordance with Art. 153(4) EPC

(43) Date of publication:
**10.12.2025 Bulletin 2025/50**

(21) Application number: **24763084.1**

(22) Date of filing: **26.02.2024**

(51) International Patent Classification (IPC):
**H04W 74/08** (2024.01)

(52) Cooperative Patent Classification (CPC):
**H04B 7/185; H04W 4/029; H04W 72/044;
H04W 74/08; H04W 74/0833**

(86) International application number:
**PCT/CN2024/078539**

(87) International publication number:
**WO 2024/179402 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023 CN 202310227957
05.12.2023 CN 202311665086**

(71) Applicant: **Huawei Technologies Co., Ltd.
Shenzhen, Guangdong 518129 (CN)**

(72) Inventors:
• **SHI, Meng**
  **Shenzhen, Guangdong 518129 (CN)**
• **LI, Zhouqi**
  **Shenzhen, Guangdong 518129 (CN)**
• **LIAO, Shuri**
  **Shenzhen, Guangdong 518129 (CN)**
• **DOU, Shengyue**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND APPARATUS**

(57) This application relates to the field of communication technologies, and provides a communication method and apparatus. The method includes: After determining a first offset value, a terminal device decreases the first offset value, where the first offset value is used to send a random access request in advance; and the terminal device sends the random access request to a network device by using a decreased first offset value, and receives a random access response from the network device, where a timing advance adjustment value indicated by the random access response is greater than or equal to 0. According to the method, the terminal device sends the random access request by using the decreased first offset value, so that the timing advance adjustment value obtained by the network device based on the decreased first offset value may be large, and a case in which the timing advance adjustment value obtained by the network device based on the first offset value is a negative value is avoided.

FIG. 5

**Description**

CROSS-REFERENCE TO RELATED APPLICATIONS

This application claims priority to Chinese Patent Application No. 202310227957.9, filed with the China National Intellectual Property Administration on February 28, 2023 and entitled "COMMUNICATION METHOD AND APPARATUS", and to Chinese Patent Application No. 202311665086.5, filed with the China National Intellectual Property Administration on December 5, 2023 and entitled "COMMUNICATION METHOD AND APPARATUS", both of which are incorporated herein by reference in their entireties.

TECHNICAL FIELD

This application relates to the field of communication technologies, and in particular, to a communication method and apparatus.

BACKGROUND

Satellite communication is non-terrestrial network (non-terrestrial network, NTN) communication. Because a satellite has advantages such as not being easily affected by natural disasters or external damage, currently, research is being conducted on using the satellite as an access network device (for example, a base station) of a mobile communication system to provide communication services for some areas such as oceans and forests. Different from a ground base station, the satellite moves at a higher speed relative to the ground and has a longer signal propagation distance. Consequently, a signal path loss of the satellite serving as the base station is larger. A communication mechanism designed for a terminal device and a ground base station in a current mobile communication system cannot be directly applied between the terminal device and a satellite base station.

In the mobile communication system, to implement slot alignment of uplink data on a base station side, when sending the uplink data, the terminal device sends the uplink data in advance based on a timing advance (timing advance, TA). However, in comparison with the mobile communication system on land, NTN communication has a larger transmission delay. For example, a round-trip delay of geostationary earth orbit (geostationary earth orbit, GEO) satellite communication (in a regenerative mode) is 238 ms to 270 ms. A round-trip delay of low earth orbit (low earth orbit, LEO) satellite communication (at an orbit altitude of 1200 km, in the regenerative mode) is 8 ms to 20 ms. In an initial access procedure of satellite communication, the terminal device calculates the TA based on a position of the terminal device and ephemeris information of the satellite, and sends a random access request on a physical random access channel (physical random access channel, PRACH) based on the calculated TA. However, in satellite communication, a specific value of the timing advance is affected by factors such as a satellite coverage area, a two-way transmission delay, and high-speed satellite movement. How the terminal device calculates the timing advance to implement slot alignment and correctly receive and demodulate the uplink data of the terminal device on a network side is an urgent problem to be resolved.

SUMMARY

This application provides a communication method and apparatus, to determine, in an initial access procedure, an offset value for sending a random access request in advance.

According to a first aspect, this application provides a communication method. The method is performed by a terminal device or a module or a chip in the terminal device. An example in which the method is performed by the terminal device is used for description herein. The method includes: determining a first offset value, where the first offset value is used to send a random access request in advance; decreasing the first offset value, and sending the random access request to a network device by using a decreased first offset value, where a timing advance adjustment value indicated by a random access response corresponding to the random access request sent by using the decreased first offset value is greater than or equal to 0; and receiving the random access response from the network device.

According to the method provided in this application, the terminal device determines the first offset value, and decreases the first offset value. Therefore, when the terminal device sends the random access request by using the decreased first offset value, the first offset value may be prevented from being excessively large. In this way, the timing advance adjustment value obtained by the network device based on the decreased first offset value may be large, a case in which the timing advance adjustment value obtained by the network device based on the first offset value is a negative value is avoided, and system robustness is improved.

In a possible implementation, the decreased first offset value satisfies the following form:

$$T_{TA1} = \left(N_{TA} + N_{TA,offset} + N_{TA,adj}^{common} + N_{TA,adj}^{UE} - N_{offset}\right)T.$$

$T_{TA1}$ represents the decreased first offset value, and a value of $N_{TA}$ is determined based on an indication of the network device, or if the network device does not indicate the value of $N_{TA}$, the value of $N_{TA}$ is 0; a value of $N_{TA,offset}$ is determined based on an indication of the network device, or if the network device does not indicate the value of $N_{TA,offset}$, the value of $N_{TA,offset}$ is a default value; a value of $N_{TA,adj}^{common}$ is determined based on a higher-layer parameter configured on a network side, or if the higher-layer parameter is not configured on the network side, the value of $N_{TA,adj}^{common}$ is 0; T represents a time unit; if ephemeris information of the network device is configured, $N_{TA,adj}^{UE}$ is determined based on position information of the terminal device and the ephemeris information of the network device, or if the ephemeris information of the network device is not configured, a value of $N_{TA,adj}^{UE}$ is 0; and $N_{offset}$ is error information, and $N_{offset}$ is greater than 0.

According to the foregoing method, factors such as the error information are considered, so that the decreased first offset value is less than the first offset value, and the decreased first offset value better meets an actual situation and is more accurate. Therefore, when the terminal device sends the random access request by using the decreased first offset value, the timing advance adjustment value obtained by the network device based on the decreased first offset value may be large (for example, may be greater than or equal to 0), and a case in which the timing advance adjustment value is a negative value is avoided.

In a possible implementation, a value of the error information $N_{offset}$ is indicated by the network device.

In a possible implementation, the error information is determined based on at least one of the following:
an ephemeris calculation error, where the ephemeris calculation error is an error generated when position information of the network device is determined based on the ephemeris information; a timing error, where the timing error is an error generated when a delay between the terminal device and the network device is determined based on the position information of the terminal device and the ephemeris information of the network device; a positioning error, where the positioning error is an error generated when the position information of the terminal device is determined; and an interpolation error, where the interpolation error is an error generated when the position information of the terminal device and/or the ephemeris information of the network device are/is calculated in an interpolation manner.

In a possible implementation, the random access response indicates the timing advance adjustment value, and the method further includes:
determining a timing advance based on the timing advance adjustment value and the decreased first offset value, where the timing advance is used to send an uplink message.

According to a second aspect, this application provides a communication method. The method is performed by a network device or a module or a chip in the network device. An example in which the method is performed by the network device is used for description herein. The method includes: receiving a random access request from a terminal device, where the random access request is sent by using a decreased first offset value, and the first offset value is used to send the random access request in advance; and sending a random access response to the terminal device based on the random access request, where a timing advance adjustment value indicated by the random access response is greater than or equal to 0.

In a possible implementation, the random access response includes the timing advance adjustment value, and the timing advance adjustment value is greater than or equal to 0.

In a possible implementation, the decreased first offset value satisfies the following form:

$$T_{TA1} = \left(N_{TA} + N_{TA,offset} + N_{TA,adj}^{common} + N_{TA,adj}^{UE} - N_{offset}\right)T.$$

$T_{TA1}$ represents the decreased first offset value, and a value of $N_{TA}$ is determined based on an indication of the network device, or if the network device does not indicate the value of $N_{TA}$, the value of $N_{TA}$ is 0; a value of $N_{TA,offset}$ is determined based on an indication of the network device, or if the network device does not indicate the value of $N_{TA,offset}$, the value of $N_{TA,offset}$ is a default value; a value of $N_{TA,adj}^{common}$ is determined based on a higher-layer parameter configured on a network side, or if the higher-layer parameter is not configured on the network side, the value of $N_{TA,adj}^{common}$ is 0; T represents a time unit; if ephemeris information of the network device is configured, $N_{TA,adj}^{UE}$ is determined based on position information of the terminal device and the ephemeris information of the network device, or if the ephemeris information of the network device is not configured, a value of $N_{TA,adj}^{UE}$ is 0; and $N_{offset}$ is error information, and $N_{offset}$ is greater than 0.

In a possible implementation, a value of the error information $N_{offset}$ is indicated by the network device.

In a possible implementation, the error information is determined based on at least one of the following: an ephemeris calculation error, where the ephemeris calculation error is an error generated when position information of the network device is determined based on the ephemeris information; a timing error, where the timing error is an error generated when a delay between the terminal device and the network device is determined based on the position information of the terminal device and the ephemeris information of the network device; a positioning error, where the positioning error is an error generated when the position information of the terminal device is determined; and an interpolation error, where the interpolation error is an error generated when the position information of the terminal device and/or the ephemeris information of the network device are/is calculated in an interpolation manner.

According to a third aspect, this application provides a communication method. The method is performed by a terminal device or a module or a chip in the terminal device. An example in which the method is performed by the terminal device is used for description herein. The method includes: determining a second offset value based on position information of the terminal device and ephemeris information of a network device; sending a random access request to the network device by using the second offset value; and receiving a random access response from the network device, where a timing advance adjustment value indicated by the random access response is not less than 0.

In a possible implementation, the second offset value satisfies the following form:

$$T_{TA2} = \left(N_{TA} + N_{TA,offset} + N_{TA,adj}^{common} + N_{TA,adj2}^{UE}\right)T.$$

T represents a time unit, $T_{TA2}$ represents the second offset value, and a value of $N_{TA}$ is determined based on an indication of the network device, or the value is 0; a value of $N_{TA,offset}$ is determined based on an indication of the network device, or if the network device does not indicate the value of $N_{TA,offset}$, the value is a default value; if a higher-layer parameter is configured, $N_{TA,adj}^{common}$ is determined based on the higher-layer parameter, or if the higher-layer parameter is not configured, a value of $N_{TA,adj}^{common}$ is 0; and if the ephemeris information of the network device is configured, $N_{TA,adj2}^{UE}$ is calculated based on the position information of the terminal device and the ephemeris information of the network device, or if the ephemeris information of the network device is not configured, a value of $N_{TA,adj2}^{UE}$ is 0.

In a possible implementation, in an initial access phase, the terminal device determines $T_{TA2}$ based on $N_{TA,adj2}^{UE}$ that is calculated based on the position information of the terminal device and the ephemeris information of the network device, and sends the random access request in advance by using $T_{TA2}$. The terminal device expects that after the random access request is sent by using $T_{TA2}$, the timing advance adjustment value received in the random access response is not less than 0.

In a possible implementation, determining the second offset value based on the position information of the terminal device and the ephemeris information of the network device includes: determining the second offset value based on the position information of the terminal device, the ephemeris information of the network device, and error information, where the error information is determined based on at least one of an ephemeris calculation error, a synchronization signal timing error, a positioning error, and an interpolation error.

According to the method provided in this application, factors such as the error information are considered for the second offset value determined by the terminal device, to improve accuracy of the second offset value. Further, the second offset value for which the factors such as the error information are considered is less than an existing offset value. Therefore, when the terminal device sends the random access request by using the second offset value, the timing advance adjustment value obtained by the network device based on the second offset value may be large (for example, may be greater than or equal to 0), and a case in which the timing advance adjustment value is a negative value is avoided.

In a possible implementation, the second offset value satisfies the following form:

$$T_{TA2} = \left(N_{TA} + N_{TA,offset} + N_{TA,adj}^{common} + N_{TA,adj}^{UE} - N_{offset}\right)T.$$

$T_{TA2}$ represents the second offset value, and a value of $N_{TA}$ is determined based on an indication of the network device, or the value is 0; a value of $N_{TA,offset}$ is determined based on an indication of the network device, or if the network device does not indicate the value of $N_{TA,offset}$, the value is a default value; if a higher-layer parameter is configured,

$N_{TA,adj}^{common}$ is determined based on the higher-layer parameter, or if the higher-layer parameter is not configured, a value of $N_{TA,adj}^{common}$ is 0; if the ephemeris information of the network device is configured, $N_{TA,adj}^{UE}$ is calculated based on the position information of the terminal device and the ephemeris information of the network device, or if the ephemeris information of the network device is not configured, a value of $N_{TA,adj}^{UE}$ is 0; and $N_{offset}$ is the error information, and $N_{offset}$ is greater than 0.

In a possible implementation, $N_{TA,adj2}^{UE}$ satisfies either of the following forms:

$$N_{TA,adj2}^{UE} = N_{TA,adj}^{UE} - b \text{ or } N_{TA,adj2}^{UE} = N_{TA,adj}^{UE} \times \delta.$$

$N_{TA,adj}^{UE}$ is determined based on the position information and the ephemeris information, b and $\delta$ are determined based on the error information, b is greater than 0, and $\delta$ is greater than 0 and less than 1.

In a possible implementation, the ephemeris calculation error is an error generated when position information of the network device is determined based on the ephemeris information; the synchronization signal timing error is an error generated when synchronization signal timing between the terminal device and the network device is determined based on the position information of the terminal device and the ephemeris information of the network device;

the positioning error is an error generated when the position information of the terminal device is determined; and the interpolation error is an error generated when the position information of the terminal device and/or the ephemeris information of the network device are/is calculated in an interpolation manner.

According to a fourth aspect, this application provides a communication method. The method is performed by a network device or a module or a chip in the network device. An example in which the method is performed by the network device is used for description herein. The method includes: receiving a random access request from a terminal device, where the random access request is sent by using a second offset value, and the second offset value is determined based on position information of the terminal device and ephemeris information of the network device; and sending a random access response to the terminal device based on the random access request, where a timing advance adjustment value indicated by the random access response is not less than 0.

In a possible implementation, the second offset value satisfies the following form:

$$T_{TA2} = \left( N_{TA} + N_{TA,offset} + N_{TA,adj}^{common} + N_{TA,adj}^{UE} - N_{offset} \right) T.$$

$T_{TA2}$ represents the second offset value, and a value of $N_{TA}$ is determined based on an indication of the network device, or the value is 0; a value of $N_{TA,offset}$ is determined based on an indication of the network device, or if the network device does not indicate the value of $N_{TA,offset}$, the value is a default value; if a higher-layer parameter is configured, $N_{TA,adj}^{common}$ is determined based on the higher-layer parameter, or if the higher-layer parameter is not configured, a value of $N_{TA,adj}^{common}$ is 0; if the ephemeris information of the network device is configured, $N_{TA,adj}^{UE}$ is calculated based on the position information of the terminal device and the ephemeris information of the network device, or if the ephemeris information of the network device is not configured, a value of $N_{TA,adj}^{UE}$ is 0; and $N_{offset}$ is error information, and $N_{offset}$ is greater than 0.

In a possible implementation, the second offset value satisfies the following form:

$$T_{TA2} = \left( N_{TA} + N_{TA,offset} + N_{TA,adj}^{common} + N_{TA,adj2}^{UE} \right) T.$$

T represents a time unit, $T_{TA2}$ represents the second offset value, and a value of $N_{TA}$ is determined based on an indication of the network device, or the value is 0; a value of $N_{TA,offset}$ is determined based on an indication of the network device, or if the network device does not indicate the value of $N_{TA,offset}$, the value is a default value; if a higher-layer parameter is configured, $N_{TA,adj}^{common}$ is determined based on the higher-layer parameter, or if the higher-layer parameter is not configured, a value of $N_{TA,adj}^{common}$ is 0; and if the ephemeris information of the network device is configured, $N_{TA,adj2}^{UE}$ is calculated based on the position information of the terminal device and the ephemeris information of the network device, or if the ephemeris information of the network device is not configured, a value of $N_{TA,adj2}^{UE}$ is 0.

In a possible implementation, $N_{TA,adj2}^{UE}$ satisfies either of the following forms:

$$N_{TA,adj2}^{UE}=N_{TA,adj}^{UE}-b \text{ or } N_{TA,adj2}^{UE}=N_{TA,adj}^{UE}\times\delta.$$

$N_{TA,adj}^{UE}$ is determined based on the position information and the ephemeris information, b and $\delta$ are determined based on the error information, b is greater than 0, and $\delta$ is greater than 0 and less than 1.

In a possible implementation, an ephemeris calculation error is an error generated when position information of the network device is determined based on the ephemeris information; a synchronization signal timing error is an error generated when synchronization signal timing between the terminal device and the network device is determined based on the position information of the terminal device and the ephemeris information of the network device; a positioning error is an error generated when the position information of the terminal device is determined; and an interpolation error is an error generated when the position information of the terminal device and/or the ephemeris information of the network device are/is calculated in an interpolation manner.

According to a fifth aspect, this application provides a communication method. The method is performed by a terminal device or a module or a chip in the terminal device. An example in which the method is performed by the terminal device is used for description herein. The method includes: receiving first information from a network device, where the first information indicates a first value; and sending a random access request to the network device, where a sending time point of the random access request is determined based on the first value, $N_{TA}$, $N_{TA,offset}$, $N_{TA,adj}^{common}$, and $N_{TA,adj}^{UE}$; a value of $N_{TA}$ is determined based on an indication of the network device, or if the network device does not indicate the value of $N_{TA}$, the value of $N_{TA}$ is 0; a value of $N_{TA,offset}$ is determined based on an indication of the network device, or if the network device does not indicate the value of $N_{TA,offset}$, the value of $N_{TA,offset}$ is a default value; a value of $N_{TA,adj}^{common}$ is determined based on a higher-layer parameter configured on a network side, or if the higher-layer parameter is not configured on the network side, the value of $N_{TA,adj}^{common}$ is 0; and if ephemeris information of the network device is configured, $N_{TA,adj}^{UE}$ is determined based on position information of the terminal device and the ephemeris information of the network device, or if the ephemeris information of the network device is not configured, a value of $N_{TA,adj}^{UE}$ is 0.

Currently, because the sending time point of the random access request is estimated by the terminal device, the random access request may be sent prematurely or excessively late, and alignment cannot be implemented with the network side. As a result, data demodulation fails, and access performance is affected. However, according to the foregoing method, the network device indicates the first value to the terminal device, and when sending the random access request, the terminal device may determine the sending time point of the random access request based on the first value, so that the terminal device can accurately determine the sending time point of the random access request, and the sending time point of the random access request can be aligned with the network side, to increase a data demodulation success rate on the network side and improve access performance.

In a possible implementation, the sending time point $T_{TX1}$ of the random access request satisfies the following form:

$$T_{TX1}=T_{TX2}-T_{TA3}.$$

$T_{TA3}$ is determined based on the first value $N_{offsert2}$, $N_{TA}$, $N_{TA,offset}$, $N_{TA,adj}^{common}$, and $N_{TA,adj}^{UE}$, and $T_{TX2}$ represents a start time point of a random access channel occasion corresponding to the random access request.

In a possible implementation, $T_{TA3}$ satisfies the following form:

$$T_{\text{TA3}} = \left( N_{\text{TA}} + N_{\text{TA,offset}} + N_{\text{TA,adj}}^{\text{common}} + N_{\text{TA,adj}}^{\text{UE}} - N_{\text{offset2}} \right) T$$ , where the first value $N_{\text{offset2}}$ is greater than 0; or

$$T_{\text{TA3}} = \left( N_{\text{TA}} + N_{\text{TA,offset}} + N_{\text{TA,adj}}^{\text{common}} + N_{\text{TA,adj}}^{\text{UE}} + N_{\text{offset2}} \right) T$$ , where the first value $N_{\text{offset2}}$ is less than 0.

T represents a time unit.

In a possible implementation, the sending time point $T_{\text{TX1}}$ of the random access request satisfies the following form:

$$T_{\text{TX1}} = T_{\text{TX2}} - (T_{\text{TA}} - N_{\text{offset2}}) \text{ or } T_{\text{TX1}} = T_{\text{TX2}} - (T_{\text{TA}} - N_{\text{offset2}} \times T).$$

$N_{\text{offset2}}$ represents the first value, the first value is greater than 0, $T_{\text{TA}}$ represents a first offset value, $T_{\text{TA}}$ is determined based on $N_{\text{TA}}$, $N_{\text{TA,offset}}$, $N_{\text{TA,adj}}^{\text{common}}$, and $N_{\text{TA,adj}}^{\text{UE}}$, $T_{\text{TX2}}$ represents a start time point of a random access channel occasion corresponding to the random access request, and T represents a time unit.

In a possible implementation, the sending time point $T_{\text{TX1}}$ of the random access request satisfies the following form:

$$T_{\text{TX1}} = T_{\text{TX2}} - (T_{\text{TA}} + N_{\text{offset2}}) \text{ or } T_{\text{TX1}} = T_{\text{TX2}} - (T_{\text{TA}} + N_{\text{offset2}} \times T).$$

$N_{\text{offset2}}$ represents the first value, the first value is less than 0, $T_{\text{TA}}$ represents a first offset value, $T_{\text{TA}}$ is determined based on $N_{\text{TA}}$, $N_{\text{TA,offset}}$, $N_{\text{TA,adj}}^{\text{common}}$ and $N_{\text{TA,adj}}^{\text{UE}}$, $T_{\text{TX2}}$ represents a start time point of a random access channel occasion corresponding to the random access request, and T represents a time unit.

In a possible implementation, the first value is determined based on at least one of the following:

an ephemeris calculation error, where the ephemeris calculation error is an error generated when position information of the network device is determined based on the ephemeris information;
a timing error, where the timing error is an error generated when a delay between the terminal device and the network device is determined based on the position information of the terminal device and the ephemeris information of the network device;
a positioning error, where the positioning error is an error generated when the position information of the terminal device is determined; and
an interpolation error, where the interpolation error is an error generated when the position information of the terminal device and/or the ephemeris information of the network device are/is calculated in an interpolation manner.

In a possible implementation, the method further includes: receiving a random access response from the network device, where the random access response indicates a timing advance adjustment value.

In a possible implementation, the timing advance adjustment value is greater than or equal to 0.

In a possible implementation, the method further includes: determining a timing advance based on the timing advance adjustment value and the first value, where the timing advance is used to send an uplink message.

According to a sixth aspect, this application provides a communication method. The method is performed by a network device or a module or a chip in the network device. An example in which the method is performed by the network device is used for description herein. The method includes: sending first information, where the first information indicates a first value; the first value, $N_{\text{TA}}$, $N_{\text{TA,offset}}$, $N_{\text{TA,adj}}^{\text{common}}$, and $N_{\text{TA,adj}}^{\text{UE}}$ are used to determine a sending time point of a random access request; a value of $N_{\text{TA}}$ is determined based on an indication of the network device, or if the network device does not indicate the value of $N_{\text{TA}}$, the value of $N_{\text{TA}}$ is 0; a value of $N_{\text{TA,offset}}$ is determined based on an indication of the network device, or if the network device does not indicate the value of $N_{\text{TA,offset}}$, the value of $N_{\text{TA,offset}}$ is a default value; a value of $N_{\text{TA,adj}}^{\text{common}}$ is determined based on a higher-layer parameter configured on a network side, or if the higher-layer parameter is not configured on the network side, the value of $N_{\text{TA,adj}}^{\text{common}}$ is 0; and if ephemeris information of the network device is configured, $N_{TA,adj}^{UE}$ is determined based on position information of a terminal device and the ephemeris information of the network device, or if the ephemeris information of the network device is not configured, a value of $N_{TA,adj}^{UE}$ is 0; and receiving the random access request from the terminal device.

In a possible implementation, the sending time point $T_{TX1}$ of the random access request satisfies the following form:

$$T_{TX1}=T_{TX2}-T_{TA3}.$$

$T_{TA3}$ is determined based on the first value $N_{offset2}$, $N_{TA}$, $N_{TA,offset}$, $N_{TA,adj}^{common}$, and $N_{TA,adj}^{UE}$, and $T_{TX2}$ represents a start time point of a random access channel occasion corresponding to the random access request.

In a possible implementation, $T_{TA3}$ satisfies the following form:

$$T_{TA3} = \left(N_{TA} + N_{TA,offset} + N_{TA,adj}^{common} + N_{TA,adj}^{UE} - N_{offset2}\right)T \quad,$$

where the first value $N_{offset2}$ is greater than 0; or

$$T_{TA3} = \left(N_{TA} + N_{TA,offset} + N_{TA,adj}^{common} + N_{TA,adj}^{UE} + N_{offset2}\right)T \quad,$$

where the first value $N_{offset2}$ is less than 0.

T represents a time unit.

In a possible implementation, the sending time point $T_{TX1}$ of the random access request satisfies the following form:

$$T_{TX1}=T_{TX2}-(T_{TA}-N_{offset2}) \text{ or } T_{TX1}=T_{TX2}-(T_{TA}-N_{offset2}\times T).$$

$N_{offset2}$ represents the first value, the first value is greater than 0, $T_{TA}$ represents a first offset value, $T_{TA}$ is determined based on $N_{TA}$, $N_{TA,offset}$, $N_{TA,adj}^{common}$, and $N_{TA,adj}^{UE}$, $T_{TX2}$ represents a start time point of a random access channel occasion corresponding to the random access request, and T represents a time unit.

In a possible implementation, the sending time point $T_{TX1}$ of the random access request satisfies the following form:

$$T_{TX1}=T_{TX2}-(T_{TA}+N_{offset2}) \text{ or } T_{TX1}=T_{TX2}-(T_{TA}+N_{offset2}\times T).$$

$N_{offset2}$ represents the first value, the first value is less than 0, $T_{TA}$ represents a first offset value, $T_{TA}$ is determined based on $N_{TA}$, $N_{TA,offset}$, $N_{TA,adj}^{common}$, and $N_{TA,adj}^{UE}$, $T_{TX2}$ represents a start time point of a random access channel occasion corresponding to the random access request, and T represents a time unit.

In a possible implementation, the first value is determined based on at least one of the following:

an ephemeris calculation error, where the ephemeris calculation error is an error generated when position information of the network device is determined based on the ephemeris information;

a timing error, where the timing error is an error generated when a delay between the terminal device and the network device is determined based on the position information of the terminal device and the ephemeris information of the network device;

a positioning error, where the positioning error is an error generated when the position information of the terminal device is determined; and

an interpolation error, where the interpolation error is an error generated when the position information of the terminal device and/or the ephemeris information of the network device are/is calculated in an interpolation manner.

In a possible implementation, the method further includes: receiving a random access response from the network device, where the random access response indicates a timing advance adjustment value.

In a possible implementation, the timing advance adjustment value is greater than or equal to 0.

According to a seventh aspect, an embodiment of this application provides a communication apparatus. The apparatus may be used in a terminal device, and has a function of implementing the method performed by the terminal device in the first aspect, the third aspect, or the fifth aspect. The function may be implemented by hardware, or may be implemented by hardware executing corresponding software. The hardware or the software includes one or more units corresponding to the function. For example, a communication unit and a processing unit are included. The communication unit may also be referred to as a transceiver unit or a transceiver module. The communication unit may specifically include a receiving unit and a sending unit. The processing unit may also be referred to as a processing module.

In an implementation, the communication apparatus is a communication chip, and the communication unit may be an input/output circuit or a port, a communication interface, an output circuit, an input circuit, a pin, a related circuit, or the like of the communication chip. The processing unit may be a processing circuit or a logic circuit of the communication chip.

Optionally, the communication apparatus may further include one or more memories. The memory is configured to be coupled to a processor, and stores necessary program instructions and/or data. The one or more memories may be integrated with the processor, or may be disposed independent of the processor. This is not limited in this application.

In another implementation, the communication apparatus includes a communication interface, a processor, and a memory. The processor is configured to control the communication interface to receive and send a signal. The memory is configured to store a computer program. The processor is configured to run the computer program in the memory, to enable the communication apparatus to perform the method in any one of the first aspect or the possible implementations of the first aspect, enable the communication apparatus to perform the method in any one of the third aspect or the possible implementations of the third aspect, or enable the communication apparatus to perform the method in any one of the fifth aspect or the possible implementations of the fifth aspect.

According to an eighth aspect, an embodiment of this application provides a communication apparatus. The apparatus may be used in a network device, and has a function of implementing the method performed by the network device in the second aspect, the fourth aspect, or the sixth aspect. The function may be implemented by hardware, or may be implemented by hardware executing corresponding software. The hardware or the software includes one or more units corresponding to the function. For example, a communication unit and a processing unit are included. The communication unit may also be referred to as a transceiver unit or a transceiver module. The communication unit may specifically include a receiving unit and a sending unit. The processing unit may also be referred to as a processing module.

In an implementation, the communication apparatus is a communication chip, and the communication unit may be an input/output circuit or a port, a communication interface, an output circuit, an input circuit, a pin, a related circuit, or the like of the communication chip. The processing unit may be a processing circuit or a logic circuit of the communication chip.

Optionally, the communication apparatus may further include one or more memories. The memory is configured to be coupled to a processor, and stores necessary program instructions and/or data. The one or more memories may be integrated with the processor, or may be disposed independent of the processor. This is not limited in this application.

In another implementation, the communication apparatus includes a communication interface, a processor, and a memory. The processor is configured to control the communication interface to receive and send a signal. The memory is configured to store a computer program. The processor is configured to run the computer program in the memory, to enable the communication apparatus to perform the method in any one of the second aspect or the possible implementations of the second aspect, enable the communication apparatus to perform the method in any one of the fourth aspect or the possible implementations of the fourth aspect, or enable the communication apparatus to perform the method in any one of the sixth aspect or the possible implementations of the sixth aspect.

According to a ninth aspect, a computer-readable storage medium is provided, and is used to store a computer program. The computer program includes instructions used to perform the method in any one of the first aspect or the possible implementations of the first aspect, the computer program includes instructions used to perform the method in any one of the third aspect or the possible implementations of the third aspect, or the computer program includes instructions used to perform the method in any one of the fifth aspect or the possible implementations of the fifth aspect.

According to a tenth aspect, a computer-readable storage medium is provided, and is used to store a computer program. The computer program includes instructions used to perform the method in any one of the second aspect or the possible implementations of the second aspect, the computer program includes instructions used to perform the method in any one of the fourth aspect or the possible implementations of the fourth aspect, or the computer program includes instructions used to perform the method in any one of the sixth aspect or the possible implementations of the sixth aspect.

According to an eleventh aspect, a computer program product is provided. The computer program product includes computer program code. When the computer program code is run on a computer or a communication apparatus, the computer or the communication apparatus is enabled to perform the method in any one of the first aspect or the possible implementations of the first aspect, the computer or the communication apparatus is enabled to execute instructions of the method in any one of the third aspect or the possible implementations of the third aspect, or the computer or the communication apparatus is enabled to execute instructions of the method in any one of the fifth aspect or the possible implementations of the fifth aspect.

According to a twelfth aspect, a computer program product is provided. The computer program product includes computer program code. When the computer program code is run on a computer or a communication apparatus, the computer or the communication apparatus is enabled to perform the method in any one of the second aspect or the possible implementations of the second aspect, the computer or the communication apparatus is enabled to execute instructions of the method in any one of the fourth aspect or the possible implementations of the fourth aspect, or the computer or the communication apparatus is enabled to execute instructions of the method in any one of the sixth aspect or the possible implementations of the sixth aspect.

According to a thirteenth aspect, an embodiment of this application further provides a chip, including a processor. The processor is configured to invoke a computer program or computer instructions in a memory, to enable the processor to perform any one of the possible implementations of the first aspect, enable the processor to execute instructions of the method in any one of the possible implementations of the third aspect, or enable the processor to execute instructions of the method in any one of the fifth aspect or the possible implementations of the fifth aspect.

In an implementation, the processor is coupled to the memory through an interface.

According to a fourteenth aspect, an embodiment of this application further provides a chip, including a processor. The processor is configured to invoke a computer program or computer instructions in a memory, to enable the processor to perform any one of the possible implementations of the second aspect, enable the processor to execute instructions of the method in any one of the possible implementations of the fourth aspect, or enable the processor to execute instructions of the method in any one of the sixth aspect or the possible implementations of the sixth aspect.

In an implementation, the processor is coupled to the memory through an interface.

According to a fifteenth aspect, an embodiment of this application provides a communication system. The communication system includes the communication apparatus (for example, the terminal device) in the fifth aspect and the communication apparatus (for example, the network device) in the sixth aspect. Alternatively, the communication system includes a terminal device configured to implement any one of the first aspect or the possible implementations of the first aspect, and a network device configured to implement any one of the second aspect or the possible implementations of the second aspect. Alternatively, the communication system includes a terminal device configured to implement any one of the fifth aspect or the possible implementations of the fifth aspect, and a network device configured to implement any one of the sixth aspect or the possible implementations of the sixth aspect.

These aspects or another aspect of this application is clearer and more comprehensible in descriptions of the following embodiments.

## BRIEF DESCRIPTION OF DRAWINGS

FIG. 1 is a diagram of an architecture of a non-terrestrial network communication system to which an embodiment of this application is applicable;

FIG. 2 is a diagram of an architecture of a non-terrestrial network communication system to which an embodiment of this application is applicable;

FIG. 3 is a diagram of an architecture of a non-terrestrial network communication system to which an embodiment of this application is applicable;

FIG. 4 is a diagram of a timing advance according to an embodiment of this application;

FIG. 5 is a schematic flowchart of a communication method according to an embodiment of this application;

FIG. 6 is a diagram of message transmission according to an embodiment of this application;

FIG. 7 is a schematic flowchart of a communication method according to an embodiment of this application;

FIG. 8 is a schematic flowchart of a communication method according to an embodiment of this application;

FIG. 9 is a schematic flowchart of a communication method according to an embodiment of this application;

FIG. 10 is a diagram of a structure of a communication apparatus according to an embodiment of this application;

FIG. 11 is a diagram of a structure of a communication apparatus according to an embodiment of this application; and

FIG. 12 is a diagram of a structure of a communication apparatus according to an embodiment of this application.

## DESCRIPTION OF EMBODIMENTS

The following clearly describes the technical solutions in embodiments of this application with reference to the accompanying drawings in embodiments of this application. It is clear that the described embodiments are merely some but not all of embodiments of this application. The terms "first", "second", corresponding term numbers, and the like in the specification, the claims, and the accompanying drawings of this application are used to distinguish between similar objects, and are not necessarily used to describe a specific sequence or order. It should be understood that the terms used in such a way are interchangeable in appropriate circumstances, and this is merely a distinguishing manner used when objects having a same attribute are described in embodiments of this application. In addition, the terms "include", "have", and any variations thereof mean to cover a non-exclusive inclusion, so that a process, method, system, product, or device that includes a series of units is not necessarily limited to those units, but may include other units not expressly listed or inherent to such a process, method, product, or device.

A communication method provided in embodiments of this application may be applied to various mobile communication systems. For example, the mobile communication system may be a long term evolution (long term evolution, LTE) system formulated by the 3rd generation partnership project (the 3rd generation partnership project, 3GPP), may be a 5th generation (5th generation, 5G) communication system (for example, 5G new radio (new radio, NR)), may be a non-terrestrial network (non-terrestrial network, NTN), or may be a new communication system that emerges in 6G or future communication development. Alternatively, the communication system may be a machine to machine (machine to machine, M2M) network, a machine type communication (machine type communication, MTC) network, or another network.

The method and an apparatus provided in embodiments of this application are based on a same technical concept or similar technical concepts. Because problem-resolving principles of the method and the apparatus are similar, mutual reference may be made to implementation of the apparatus and implementation of the method. Repeated parts are not described in detail.

A communication apparatus in this application may be an apparatus, a device, a chip, or a module that can communicate with another device in a wireless and/or wired manner, and includes but is not limited to an apparatus or a device such as a network device or a terminal device.

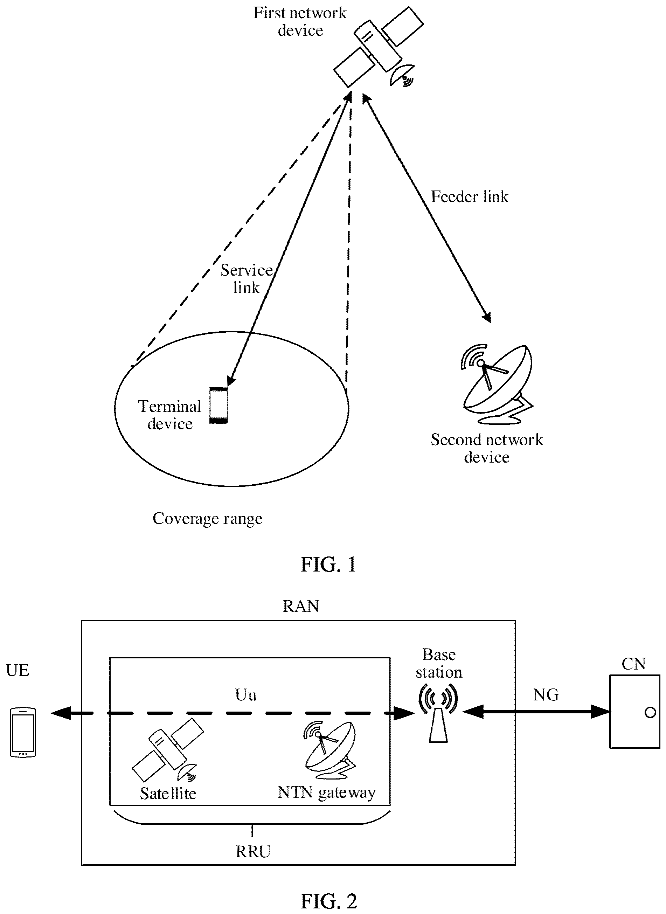

The method provided in embodiments of this application may be applied to a non-terrestrial network communication system. FIG. 1 is a diagram of an architecture of a non-terrestrial network communication system to which an embodiment of this application is applicable. The communication system may include a terminal device, a first network device, and a second network device. A communication link between the first network device and the second network device is a feedback link (also referred to as a feeder link) (feeder link); and a communication link between the first network device and the terminal device is a service link (service link).

The first network device may be a satellite (also referred to as a satellite base station), including but not limited to a geostationary earth orbit (geostationary earth orbit, GEO) satellite, a medium earth orbit (medium earth orbit, MEO) satellite and a low earth orbit (low earth orbit, LEO) satellite in a non-geostationary earth orbit (none-geostationary earth orbit, NGEO), a high altitude communication platform (high altitude platform station, HAPS), or the like. This is not limited herein.

In this embodiment of this application, communication modes of the first network device may include a regenerative (regenerative) mode and a transparent (transparent) mode.

When the communication mode of the first network device is the regenerative mode, the first network device may serve as a base station for wireless communication. For example, the first network device may be an artificial earth satellite or a high-altitude aircraft that serves as a base station for wireless communication, for example, an evolved NodeB (eNB) or a 5G base station (gNB). The first network device may perform transparent transmission on signaling between the first network device and a core network.

When the communication mode of the first network device is the transparent mode, the first network device serves as a base station for wireless communication, and the first network device may serve as a relay of the base stations and may perform transparent transmission on a signal between the first network device and the terminal device.

The first network device may communicate with the terminal device by using a beam. The first network device adjusts a weight of an antenna, so that a beam of the satellite may point to different directions and have different coverage ranges.

The second network device may be a gateway (also referred to as a terrestrial station, an earth station, or a gateway station) (gateway), and may be configured to connect the first network device to the core network.

In this application, after the satellite transmits a radio signal through the antenna by using a spatial parameter (spatial domain parameter), a specific coverage range is formed in a specified spatial direction, and a terminal device in the coverage range may communicate with the satellite. The coverage range may also be referred to as a beam or a cell. The spatial parameter may also be understood as a beam, and the beam is a main lobe of a directional array pattern of a signal sent by the satellite. The satellite may adjust the weight of the antenna, so that the beam may point to different directions and have different coverage ranges.

In this application, the spatial parameter may be referred to as another name, for example, may be referred to as any one of the following names: a beam, a spatial domain filter (spatial domain filter), a spatial filter (spatial filter), a spatial domain parameter, a spatial domain setting (spatial domain setting), a spatial setting (spatial setting), quasi-colocation (quasi-colocation, QCL) information, a QCL assumption, or a QCL indication. In this application, the spatial parameter may be replaced with terms such as the beam, the spatial domain filter, the spatial filter, the spatial domain parameter, a space parameter, the spatial domain setting, the spatial setting, the QCL information, the QCL assumption, the QCL indication, or a spatial relationship. This is not limited herein in this application.

In this application, the terminal device may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in embodiments of this application.

In this application, the network device may also be referred to as an access network device, and includes but is not limited to a satellite, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like; or may be a network device in a 5G mobile communication system, for example, a next generation NodeB (next generation NodeB, gNB), a transmission reception point (transmission reception point, TRP), or a TP in an NR system; or one antenna panel or one group of antenna panels (including a plurality of antenna panels) of a base station in the 5G mobile communication system. Alternatively, the network device may be a network node that forms a gNB or a transmission point, for example, a BBU or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (media access control, MAC) layer, and a physical (physical, PHY) layer. The AAU implements some physical layer processing functions, radio frequency processing, and a function related to an active antenna. Information at the RRC layer is finally changed to information at the PHY layer, or is changed from the information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in a RAN, or the CU may be classified as a network device in the core network (core network, CN). This is not limited in this application.

It may be understood that, in different systems, the CU (including a CU-CP or a CU-UP) or the DU may alternatively have different names, but a person skilled in the art can understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application. The network device may further include an active antenna unit (active antenna unit, AAU). The CU implements some functions of the gNB, and the DU implements some functions of the gNB. For example, the CU is responsible for processing the non-real-time protocol and service, and implements the function of the RRC layer. The DU is responsible for processing the physical layer protocol and the real-time service, and implements the functions of the radio link control (radio link control, RLC) layer, the medium access control (media access control, MAC) layer, and the physical (physical, PHY) layer. In some deployments, the CU may be further divided into a central unit control plane (CU-CP) node and a central unit user plane (CU-UP) node. The CU-CP is responsible for a control plane function, and the CU-UP is responsible for a user plane function.

FIG. 2 is a diagram of another network architecture to which this application is applicable. As shown in FIG. 2, a terminal device communicates with a ground base station through a Uu interface. A satellite may implement transparent payload transmission between the terminal device and the ground base station. The satellite and an NTN gateway may be considered as remote radio units (remote radio units, RRUs) of the ground base station, and implement transparent forwarding of a signal. In other words, the satellite supports functions such as radio frequency filtering, frequency conversion, and amplification, and a signal waveform remains unchanged. Forwarding of the satellite is transparent to the terminal device. The ground base station and a core network (core network, CN) may communicate with each other through a next generation (next generation, NG) network interface, and exchange non-access stratum (non-access stratum, NAS) signaling of the core network and service data of the terminal device through the NG interface.

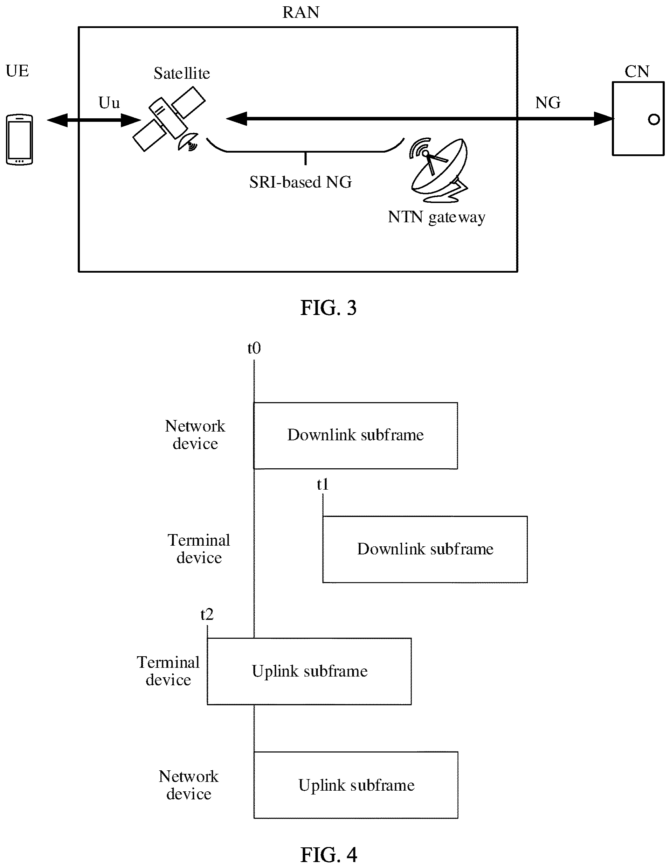

FIG. 3 is a diagram of another network architecture to which this application is applicable. A satellite has some or all functions of a network device, and may be referred to as a satellite base station. The satellite may provide a radio access service, and schedule a radio resource for a terminal device that accesses a network through the satellite. The satellite communicates with the terminal device through a Uu interface. The satellite and a CN may communicate with each other through an NG interface, and the satellite and the core network may exchange NAS signaling and service data of the terminal device through the NG interface. A satellite radio interface (satellite radio interface, SRI) is a feeder link between an NTN gateway and the satellite. In FIG. 3, the SRI interface may be used as a part of the NG interface to implement communication and interaction between the satellite and the core network.

In a communication system, a signal delay causes a signal sent by a transmit end to be not aligned with a signal received by a receive end in terms of a frequency and time, severely affecting communication performance. For example, in a scenario in which the communication system modulates a signal by using an orthogonal frequency division multiplexing (orthogonal frequency division multiplexing, OFDM) technology, the signal delay damages orthogonality between signal subcarriers, and causes interference between the subcarriers and/or between time symbols (for example, OFDM symbols). Consequently, signal demodulation performance of the receive end is greatly reduced. Therefore, the communication system needs to estimate and compensate for the signal delay, to minimize a time difference between signals whose transmission is performed between the transmit end and the receive end, so as to ensure communication performance of the system.

To ensure orthogonality of uplink transmission and avoid intra-cell interference, the network device requires that time points at which uplink frames that are of different terminal devices and that are from a same subframe but different frequency domain resources (different resource blocks) arrive at the network device are basically aligned. The network device can correctly decode the uplink frame sent by the terminal device, provided that the network device receives the uplink frame within a cyclic prefix (cyclic prefix, CP) range. Therefore, uplink synchronization requires that time points at which uplink frames that are of different terminal devices and that are from a same subframe arrive at the network device fall within the CP range. To ensure that the uplink frame of the terminal device arrives at the network device at a time point expected by the network device, an uplink timing advance mechanism may be used. In the uplink timing advance mechanism, the terminal device may send the uplink frame in advance by specified time, and the specified time is time corresponding to a timing advance.

From a perspective of a network device side, the uplink timing advance mechanism may be used to align a start time point of a downlink subframe sent by the network device with a start time point of an uplink subframe received by the network device. From a perspective of a terminal device side, a start time point of an uplink subframe sent by the terminal device has an advance relative to a start time point of a downlink subframe received by the terminal device.

For example, as shown in FIG. 4, the network device sends a downlink subframe at a moment t0. Due to a transmission delay, the terminal device receives the downlink subframe at a moment t1. The network device schedules the terminal device to send an uplink subframe at the moment t0. Because the timing advance mechanism is used, the terminal device sends the uplink subframe at a moment t2, and the moment t2 is earlier than the moment t0 by duration Tp corresponding to the timing advance. Due to the transmission delay, the network device receives the uplink subframe from the terminal device at the moment t0. In this way, a start time point of the downlink subframe can be aligned with a start time point of the uplink subframe.

In a process in which the terminal device initially accesses the network device, the following steps are included.

Step 1: The terminal device calculates a first TA, and sends a random access request to the network device based on the first TA.

Step 2: The network device performs TA estimation based on the random access request, to obtain a second TA; and the network device determines a TA adjustment value based on the first TA and the second TA, includes the TA adjustment value in a timing advance command (timing advance command, TAC) of a random access response (random access response, RAR), and indicates the TA adjustment value to the terminal device.

Step 3: The terminal device determines the TA adjustment value based on the TAC of the RAR, and adjusts the first TA based on the TA adjustment value, to obtain an adjusted first TA.

The terminal device sends an uplink message such as a message 3 by using the adjusted first TA.

In the foregoing process, due to an error, if the first TA calculated by the terminal device is excessively large, and consequently the timing advance is excessively large, the TA adjustment value determined by the network device may be a negative value. However, in a current mobile communication system, an indication of a negative TA adjustment value is not supported in an initial access procedure. When the negative TA occurs in the initial access procedure, performance of subsequent uplink data transmission is severely affected. Therefore, this application provides a method, so that the terminal device can accurately calculate the first TA, and the TA adjustment value determined by the network device is a number greater than or equal to 0. In this way, a protocol requirement is met, occurrence of the negative TA is avoided, and system robustness is improved.

The network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

The method provided in this application may be applied to the systems shown in FIG. 1 to FIG. 3. When a method procedure provided in this application is applied to the system shown in FIG. 1, the first network device or the second network device in FIG. 1 may perform a method performed by the network device in the following procedure, and the terminal device in FIG. 1 may perform a method performed by the terminal device in the following procedure. When the method procedure provided in this application is applied to the system shown in FIG. 2 or FIG. 3, the satellite or the base station in FIG. 2 or FIG. 3 may perform the method performed by the network device in the following procedure, and the terminal device in FIG. 2 or FIG. 3 may perform the method performed by the terminal device in the following procedure. It may be understood that a specific structure of an execution body of the method provided in embodiments of this application is not particularly limited in the following embodiments, provided that a program that records code of the method provided in embodiments of this application can be run to perform communication according to the method provided in embodiments of this application. For example, the execution body may be a terminal device or a functional module, for example, a chip, that can invoke and execute a program in the terminal device, or the execution body may be a network device or a functional module, for example, a chip, that can invoke and execute a program in the network device. In the following embodiments, only the terminal device or the network device is used as an example for description.

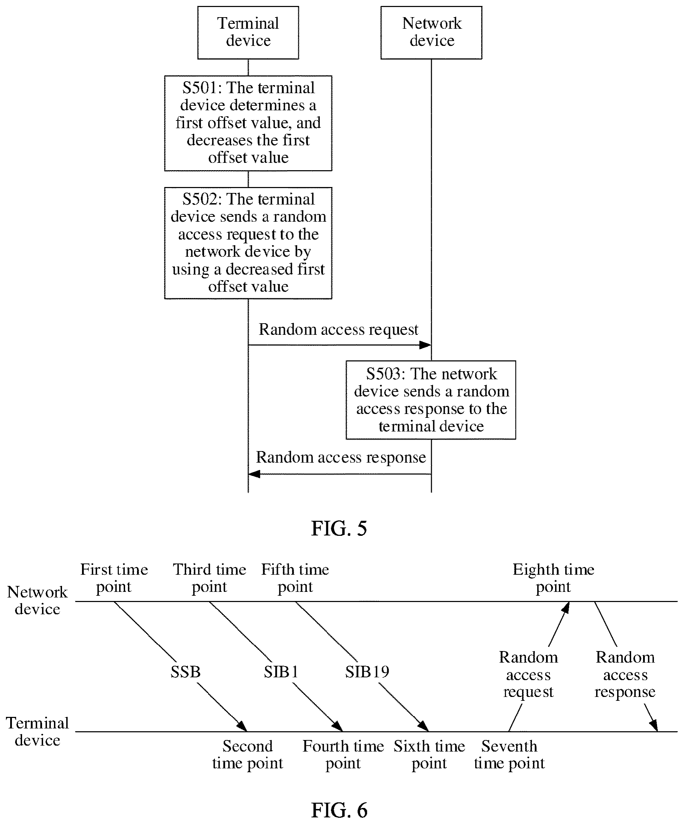

FIG. 5 is a schematic flowchart of a communication method according to an embodiment of this application.

S501: A terminal device determines a first offset value, and decreases the first offset value.

In this application, the first offset value is used to send a random access request in advance.

S502: The terminal device sends the random access request to a network device by using a decreased first offset value; and correspondingly, the network device receives the random access request from the terminal device.

A timing advance adjustment value indicated by a random access response corresponding to the random access request sent by using the decreased first offset value is greater than or equal to 0.

In an implementation, the random access request may be a message 1 in a four-step random access procedure, and the message 1 may also be referred to as a preamble. In another implementation, the random access request may be a message A in a two-step random access procedure, and the message A may include a preamble and data.

In this application, the terminal device may send the random access request in advance by using the decreased first offset value. For example, the network device may send a system information block 1 (system information block 1, SIB1), and the SIB1 may indicate a random access channel occasion (random access channel occasion, RO). How the SIB1 specifically indicates the RO is not limited in this application. The RO is used to send the random access request, the RO may include a time-frequency resource used to carry the random access request, and a start time point of the RO may also be understood as a start time point of the time-frequency resource included in the RO. The terminal device may determine the random access channel occasion (random access channel occasion, RO) based on the SIB1, and the RO is used to send the random access request. It is assumed that the terminal device determines to send the random access request on a first RO, and a start moment of the first RO is a first moment. The terminal device may send the random access request in advance by the decreased first offset value. To be specific, the terminal device may send the random access request at a second moment before the first moment, and duration of an interval between the second moment and the first moment is the decreased first offset value.

In an implementation, the terminal device may first determine the first offset value, and then decrease the first offset value.

In this implementation, the first offset value determined by the terminal device may satisfy the following form:

$$T_{\text{TA}} = \left(N_{\text{TA}} + N_{\text{TA,offset}} + N_{\text{TA,adj}}^{\text{common}} + N_{\text{TA,adj}}^{\text{UE}}\right)T \cdots (1)$$

In this implementation, the decreased first offset value may satisfy the following form:

$$T_{\text{TA1}} = T_{\text{TA}} - N_{\text{offset}} * T \cdots (2)$$

$T_{\text{TA1}}$ represents the decreased first offset value. $N_{\text{TA}}$ is an uplink/downlink timing advance, and a value of $N_{\text{TA}}$ is determined based on an indication of the network device, or if the network device does not indicate the value of $N_{\text{TA}}$, the value of $N_{\text{TA}}$ is 0. For example, when the terminal device sends the random access request, the value of $N_{\text{TA}}$ is 0. For an uplink message after the random access request, the network device may indicate the value of $N_{\text{TA}}$ by using a TAC in the RAR, so that the terminal device may determine the value of $N_{\text{TA}}$ based on the TAC.

$N_{\text{offset}}$ is error information, and $N_{\text{offset}}$ is greater than 0.

T represents a time unit, that is, a time unit of a communication system. For example, in an NR system, T may be $T_c$, and $T_c = \dfrac{1}{\Delta f_{\max} \cdot N_{\text{f}}}$, $\Delta f_{\max} = 480 \cdot 10^3 \text{ Hz}$, and $N_{\text{f}}$ = 4096. In an LTE system, T may be $T_s$, and $T_s = \dfrac{1}{\Delta f_{\text{ref}} \cdot N_{\text{f,ref}}}$, $\Delta f_{\text{ref}}$ = 15 · 10³ Hz, and $N_{\text{f,ref}}$ = 2048.

$N_{\text{TA,offset}}$ is a fixed offset used to determine the timing advance, and a value of $N_{\text{TA,offset}}$ is a default value or a value indicated by the network device. Specifically, the value of $N_{\text{TA,offset}}$ is determined based on an indication of the network device, or if the network device does not indicate the value of $N_{\text{TA,offset}}$, the value of $N_{\text{TA,offset}}$ is the default value. For example, in an implementation, the network device may indicate the value of $N_{\text{TA,offset}}$ by using a parameter n-TimingAdvanceOffset; or if the network device does not indicate the value of $N_{\text{TA,offset}}$ by using the parameter n-TimingAdvanceOffset, the value of $N_{\text{TA,offset}}$ is a default value. For a specific value of the default value, refer to descriptions in a related protocol of the LTE system or the NR system. Details are not described herein again. $N_{\text{TA,adj}}^{\text{common}}$ is a timing correction amount controlled by a network side, and a value of $N_{\text{TA,adj}}^{\text{common}}$ is 0 or is a value indicated by the network device. Specifically, the value of $N_{\text{TA,adj}}^{\text{common}}$ is determined based on a higher-layer parameter configured on the network side, or if the higher-layer parameter is not configured on the network side, the value of $N_{\text{TA,adj}}^{\text{common}}$ is 0. For example, the network device may indicate the value of $N_{\text{TA,adj}}^{\text{common}}$ by using higher-layer parameters $TA_{\text{Common}}$, $TA_{\text{CommonDrift}}$, and $TA_{\text{CommonDriftVariation}}$, or if the network device does not indicate the value of $N_{\text{TA,adj}}^{\text{common}}$, the value of $N_{\text{TA,adj}}^{\text{common}}$ is 0. $TA_{\text{Common}}$ indicates a common timing advance value controlled by the network, and may include any timing offset considered necessary by the network. $TA_{\text{CommonDrift}}$ indicates a drift rate of a common TA. $TA_{\text{CommonDriftVariation}}$ indicates a drift rate change of the common TA. The foregoing three higher-layer parameters may be carried in an NTN configuration sent by the network device, and the terminal device may determine the value of $N_{\text{TA,adj}}^{\text{common}}$ based on the foregoing three parameters. A specific determining process is not limited in this application, and is not described herein again.

If ephemeris information of the network device is configured, $N_{\text{TA,adj}}^{\text{UE}}$ is determined based on position information of the terminal device and the ephemeris information of the network device, or if the ephemeris information of the network device is not configured, a value of $N_{\text{TA,adj}}^{\text{UE}}$ is 0.

For example, before S501, as shown in FIG. 6, the network device may send a synchronization signal/broadcast channel block (synchronization signal/physical broadcast channel block, SS/PBCH block, SSB). The SSB includes information such as system frame number information, and the SSB may further indicate information such as search space of the system information block 1 (system information block 1, SIB1). A time point at which the network device sends the SSB is a first time point, and a time point at which the terminal device receives the SSB is a second time point.

Before S501, as shown in FIG. 6, the network device may send the SIB1 and a SIB19. The SIB1 may indicate information such as system information of a cell, the RO, and scheduling information of the SIB19. The SIB19 may indicate information such as the ephemeris information of the network device. A time point at which the network device sends the SIB1 is a third time point, and a time point at which the terminal device receives the SIB1 is a fourth time point. A time point at which the network device sends the SIB19 is a fifth time point, and a time point at which the terminal device receives the SIB19 is a sixth time point.

In an implementation, the ephemeris information may include a position vector of the network device at a reference time point and a speed vector of the network device at the reference time point. For example, the terminal device may determine the reference time point based on a system information (system information, SI) time window in which the SIB19 carrying the ephemeris information is located. A specific process is not described again.

As shown in FIG. 6, a time point at which the terminal device sends the random access request is a seventh time point, and a time point at which the network device receives the random access request is an eighth time point. The network device may further send the random access response to the terminal device based on the random access request. For details, refer to descriptions of a random access procedure in the LTE system or the NR system. Details are not described herein again.

In this application, $N_{\text{TA,adj}}^{\text{UE}}$ may be equal to a sum of synchronization signal (synchronization signal, SS) timing and ephemeris timing.

For example, the terminal device may determine first position information of the network device at the first time point based on a system frame number of the SSB, a system frame number of the SIB1, and the ephemeris information of the network device. The terminal device may determine a delay between the first position information and second position information, where the delay is SS timing, and the second position information is position information of the terminal device at the second time point. The time point at which the network device receives the random access request is a time domain position of an RO resource used by the terminal device to send the random access request, so that the terminal device may determine third position information of the network device at the eighth time point based on the time domain position of the RO resource and the ephemeris information. The terminal device may determine a delay between the third position information and fourth position information, and the delay is ephemeris timing. The fourth position information is position information of the terminal device at the seventh time point.

In this application, how to determine the error information is not limited. In an implementation, a value of the error information $N_{\text{offset}}$ is indicated by the network device.

In this application, in another implementation, a value of the error information $N_{\text{offset}}$ is determined by the terminal device.

If the error information is indicated by the network device, how the network device determines the value of the error information is not limited in this application. Similarly, how the terminal device determines the value of the error information is not limited in this application. For example, the network device or the terminal device may determine the error information in the following manner. For example, the error information is determined based on at least one of the following: an ephemeris calculation error, an SS timing error, a positioning error, and an interpolation error.

For example, it is assumed that the ephemeris error is 1.4 $\mu$s, the SS timing error is 1.5 $\mu$s, the interpolation error is 0.04 $\mu$s, and the positioning error is 0.03 $\mu$s. In this case, the error information is 1.4+1.5+0.04+0.03=2.97 $\mu$s, that is, $N_{\text{offset}}$ * T=2.97 $\mu$s.

The ephemeris calculation error is an error generated when position information of the network device is determined based on the ephemeris information of the network device. For example, the ephemeris calculation error may include at least one of the following: in a process of determining the SS timing, an error generated when the first position information of the network device when the network device sends the SSB is determined based on the ephemeris information of the network device; and in a process of determining the ephemeris timing, an error generated when the third position information of the network device when the network device receives the random access request is determined based on the ephemeris information of the network device.

For example, the terminal device obtains the ephemeris information of the network device from the SIB19, and the terminal device may estimate the first position information of the network device at the first time point based on the ephemeris information, the reference time point corresponding to the ephemeris information, and the first time point at which the network device sends the SSB. An error exists in a process in which the terminal device estimates the first position information. The error may be used as a part of the ephemeris calculation error.

The SS timing error is an error generated when the synchronization signal timing between the terminal device and the network device is determined based on the position information of the terminal device and the ephemeris information of the network device, or may be understood as an error generated when a delay between the terminal device and the network device is determined based on the position information of the terminal device and the ephemeris information of the network device. Specifically, an error generated in a process in which the terminal device determines, based on the ephemeris information, the first position information of the network device when the network device sends the SSB, and determines the SS timing based on the first position information and the second position information when the terminal device receives the SSB is the SS timing error. The SS timing error may also be referred to as a timing error.

For example, in a process of calculating the SS timing, an error that may be introduced includes at least one of the following: a time deviation error $\cdot \Delta T_d^{ueVel}$ caused by a speed of the terminal device and rotation of the earth, an error $\Delta T_d^{model}$ introduced by a calculation model for calculating an ephemeris, and an error $\Delta T_d^{UTC}$ introduced by universal time coordinated (universal time coordinated, UTC) precision.

With reference to the foregoing descriptions, for example, the SS timing $T_d$ may satisfy the following form:

$$T_{\text{d}} = T_{\text{d}}^{\text{dis}} + \Delta T_d^{ueVel} + \Delta T_d^{model} + \Delta T_{\text{d}}^{\text{UTC}} \cdots (3)$$

$T_{\text{d}}^{\text{dis}}$ may be obtained by dividing a speed of an electromagnetic wave by a distance between the first position information and the second position information.

The positioning error is an error generated when the position information of the terminal device is determined. Specifically, an error generated in a process in which the terminal device determines the position information of the terminal device based on a global navigation satellite system (global navigation satellite system, GNSS) is the positioning error.

The interpolation error is an error generated when the position information of the terminal device and/or the ephemeris information of the network device are/is calculated in an interpolation manner. Specifically, the interpolation error is an additional error introduced into a process of calculating the position information of the terminal device and/or the ephemeris information of the network device through extrapolation and interpolation. The terminal device does not calculate the ephemeris information of the network device or the position information of the terminal device in each transmission time interval (transmission time interval, TTI). In a part of TTIs, the terminal device determines the ephemeris information of the network device and the position information of the terminal device through sampling point extrapolation and interpolation. For example, in a first TTI and a third TTI, the terminal device separately calculates ephemeris information of the network device and position information of the terminal device. In a second TTI between the first TTI and the third TTI, the terminal device may perform interpolation deduction based on the ephemeris information calculated in the first TTI and the ephemeris information calculated in the third TTI, to obtain ephemeris information in the second TTI. Similarly, the terminal device may perform interpolation deduction based on the position information calculated in the first TTI and the position information calculated in the third TTI, to obtain position information in the second TTI.

In this application, specific values of the ephemeris calculation error, the SS timing error, the positioning error, and the interpolation error are determined based on a plurality of factors. During actual application, one value may be preset for each of the foregoing errors, a value of each of the foregoing errors is determined based on a plurality of experiments, or the value of each of the foregoing errors may be determined in another manner. This is not limited in this application.

In another implementation, the terminal device directly determines the decreased first offset value. In other words, the terminal device does not first determine the first offset value, and then decreases the first offset value.

In this implementation, the decreased first offset value determined by the terminal device may satisfy the following form:

$$T_{\text{TA1}} = \left(N_{\text{TA}} + N_{\text{TA,offset}} + N_{\text{TA,adj}}^{\text{common}} + N_{\text{TA,adj}}^{\text{UE}} - N_{\text{offset}}\right)\text{T} \cdots (4)$$

Alternatively, the decreased first offset value determined by the terminal device may satisfy the following form:

$$T_{\text{TA1}} = \left(N_{\text{TA}} + N_{\text{TA,offset}} + N_{\text{TA,adj}}^{\text{common}} + N_{\text{TA,adj2}}^{\text{UE}}\right)\text{T} \cdots (5)$$

In this implementation, the terminal device may directly determine the decreased first offset value according to the formula (4) or the formula (5). $N_{\text{TA,adj2}}^{\text{UE}}$ is determined based on position information of the terminal device, ephemeris information of the network device, and error information. For meanings of other parameters in the formula (4) and the formula (5), refer to the descriptions in the formula (1) and the formula (2). Details are not described herein again.

In an implementation, $N_{\text{TA,adj2}}^{\text{UE}}$ may satisfy the following form:

$$N_{\text{TA,adj2}}^{\text{UE}} = N_{\text{TA,adj}}^{\text{UE}} - N_{\text{offset}} \cdots (6)$$

In an implementation, $N_{\text{TA,adj2}}^{\text{UE}}$ may satisfy the following form:

$$N_{\text{TA,adj2}}^{\text{UE}} = N_{\text{TA,adj}}^{\text{UE}} - \text{b} \cdots (7)$$

In an implementation, $N_{\text{TA,adj2}}^{\text{UE}}$ may satisfy the following form:

$$N_{\text{TA,adj2}}^{\text{UE}} = N_{\text{TA,adj}}^{\text{UE}} \times \delta \cdots (8)$$

For meanings of T and $N_{\text{TA,adj}}^{\text{UE}}$, refer to the descriptions in the formula (1). For meanings of $N_{\text{offset}}$, refer to the descriptions in the formula (2). Details are not described herein again. b is greater than 0, and δ is greater than 0 and less than 1.

In an implementation, b and δ are determined based on the error information. For example, a value of b is any value in a value range [0, $N_{\text{offset}}$]. For example, a value of δ is any value in a value range $[0, \ 1 - N_{\text{offset}}/N_{\text{TA,adj}}^{\text{UE}}]$.

S503: The network device sends the random access response to the terminal device; and correspondingly, the terminal device receives the random access response from the network device.

In a possible implementation, the random access response includes the timing advance adjustment value. For example, the network device may include a timing advance command (timing advance command, TAC) in the random access response, and the TAC indicates the timing advance adjustment value. In this implementation, the timing advance adjustment value may be used to adjust the decreased first offset value. How the network device specifically determines the timing advance adjustment value indicated by the TAC is not limited in this application.

In this application, the timing advance adjustment value may be used to determine a timing advance, and the timing advance is used by the terminal device to send an uplink message.

In a possible implementation, the terminal device determines the timing advance based on the timing advance adjustment value and the decreased first offset value. For example, the terminal device may use, as the timing advance, a difference obtained by subtracting the timing advance adjustment value from the decreased first offset value.

The terminal device may send the uplink message to the network device based on the timing advance. For example, the terminal device may send a message such as a message 3 in the four-step random access procedure to the network device based on the timing advance.

According to the method provided in this application, the decreased first offset value determined by the terminal device is less than the existing first offset value. For example, the decreased first offset value is obtained by subtracting a value from the first offset value or multiplying the first offset value by a coefficient greater than 0 and less than 1. Therefore, when the terminal device sends the random access request by using the decreased first offset value, the first offset value may be prevented from being excessively large. In this way, the timing advance adjustment value obtained by the network device based on the decreased first offset value may be large, and a case in which the timing advance adjustment value obtained by the network device based on the first offset value is a negative value is avoided.

In this application, when determining an offset value used to send the random access request in advance, the terminal device may also consider the error information, to improve accuracy of the determined offset value. In a process of determining the offset value, the terminal device expects to determine a small offset value, so that the TA adjustment value in the RAR is a number greater than or equal to 0. For details, refer to descriptions in the following procedure.

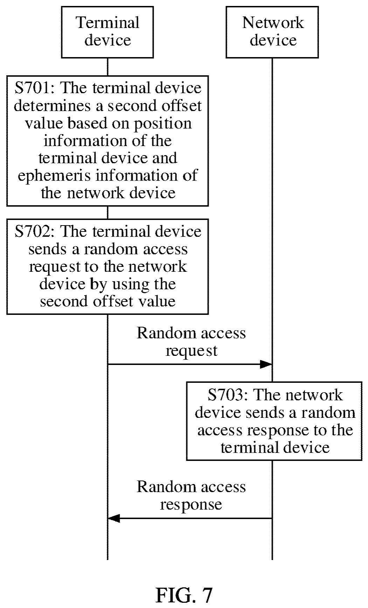

FIG. 7 is a schematic flowchart of a communication method according to an embodiment of this application.

S701: A terminal device determines a second offset value based on position information of the terminal device and ephemeris information of a network device.

In an implementation, the terminal device determines the second offset value based on the position information of the terminal device, the ephemeris information of the network device, and error information. The error information is determined based on at least one of an ephemeris calculation error, a synchronization signal timing error, a positioning error, and an interpolation error. For meanings of the error information, the ephemeris calculation error, the synchronization signal timing error, the positioning error, and the interpolation error, refer to the descriptions in S502. Details are not described herein again.

In this application, the second offset value is used to send a random access request in advance.

In an implementation, the second offset value may satisfy the following form:

$$T_{\text{TA2}} = \left( N_{\text{TA}} + N_{\text{TA,offset}} + N_{\text{TA,adj}}^{\text{common}} + N_{\text{TA,adj}}^{\text{UE}} - N_{\text{offset}} \right) \text{T} \cdots (9)$$

In an implementation, the second offset value may satisfy the following form:

$$T_{\text{TA2}} = \left( N_{\text{TA}} + N_{\text{TA,offset}} + N_{\text{TA,adj}}^{\text{common}} + N_{\text{TA,adj2}}^{\text{UE}} \right) \text{T} \cdots (10)$$

$T_{\text{TA2}}$ represents the second offset value. $N_{\text{TA}}$ is an uplink/downlink timing advance, and a value of $N_{\text{TA}}$ is determined based on an indication of the network device, or if the network device does not indicate the value of $N_{\text{TA}}$, the value of $N_{\text{TA}}$ is 0. For example, when the terminal device sends the random access request, the value of $N_{\text{TA}}$ is 0. For an uplink message after the random access request, the network device may indicate the value of $N_{\text{TA}}$ by using a TAC in a random access response, so that the terminal device may determine the value of $N_{\text{TA}}$ based on the TAC.

$N_{\text{offset}}$ is the error information, and $N_{\text{offset}}$ is greater than 0. How to specifically determine the error information is not limited. In an implementation, a value of the error information $N_{\text{offset}}$ is indicated by the network device. In another implementation, a value of the error information $N_{\text{offset}}$ is determined by the terminal device. For example, the network device or the terminal device may determine the error information in the following manner. For example, the error information is determined based on at least one of the following:

the ephemeris calculation error, the SS timing error, the positioning error, and the interpolation error.

For specific content of the error information, refer to the descriptions in step 502. Details are not described herein again.

T represents a time unit, that is, a time unit of a communication system. A value of $N_{\text{TA,offset}}$ is a default value or a value indicated by the network device. Specifically, the value of $N_{\text{TA,offset}}$ is determined based on an indication of the network device, or if the network device does not indicate the value of $N_{\text{TA,offset}}$, the value of $N_{\text{TA,offset}}$ is the default value.

$N_{\mathrm{TA,adj}}^{\mathrm{common}}$ is a timing correction amount controlled by a network side, and a value of $N_{\mathrm{TA,adj}}^{\mathrm{common}}$ is 0 or is a value indicated by the network device. Specifically, the value of $N_{\mathrm{TA,adj}}^{\mathrm{common}}$ is determined based on a higher-layer parameter configured on the network side, or if the higher-layer parameter is not configured on the network side, the value of $N_{\mathrm{TA,adj}}^{\mathrm{common}}$ is 0.

If the ephemeris information of the network device is configured, $N_{\mathrm{TA,adj}}^{\mathrm{UE}}$ is determined based on the position information of the terminal device and the ephemeris information of the network device, or if the ephemeris information of the network device is not configured, a value of $N_{\mathrm{TA,adj}}^{\mathrm{UE}}$ is 0. $N_{\mathrm{TA,adj2}}^{\mathrm{UE}}$ is a timing correction amount derived by the terminal device. If the ephemeris information of the network device is configured, $N_{\mathrm{TA,adj2}}^{\mathrm{UE}}$ is calculated based on the position information of the terminal device and the ephemeris information of the network device, or if the ephemeris information of the network device is not configured, a value of $N_{\mathrm{TA,adj2}}^{\mathrm{UE}}$ is 0. For example, $N_{\mathrm{TA,adj2}}^{\mathrm{UE}}$ may be determined according to any one of a formula (6) to a formula (8).

For meanings of other parameters in the formula (9) and the formula (10), refer to the descriptions in the formula (1) to the formula (5). Details are not described herein again.

In an implementation, the terminal device does not expect that the determined $N_{\mathrm{TA,adj2}}^{\mathrm{UE}}$ causes a TA adjustment value indicated by the random access response to be set to a negative number. Alternatively, the terminal device expects that the determined $N_{\mathrm{TA,adj2}}^{\mathrm{UE}}$ causes a TA adjustment value indicated by the random access response to be set to a number greater than or equal to 0.

In an implementation, in an initial access phase, the terminal device determines $T_{\mathrm{TA2}}$ based on $N_{\mathrm{TA,adj2}}^{\mathrm{UE}}$ that is calculated, and sends a PRACH in advance by using $T_{\mathrm{TA2}}$. The terminal device expects that after the PRACH is sent by using $T_{\mathrm{TA2}}$, the TA adjustment value received in the random access response is greater than or equal to 0. Herein, "sending the PRACH" may be replaced with "sending the random access request".

In an implementation, in an initial access phase, the terminal device determines $T_{\mathrm{TA2}}$ based on $N_{\mathrm{TA,adj2}}^{\mathrm{UE}}$ that is calculated, and sends a PRACH in advance by using $T_{\mathrm{TA2}}$. The terminal device does not expect that after the PRACH is sent by using $T_{\mathrm{TA2}}$, the TA adjustment value received in the random access response is less than 0. Herein, "sending the PRACH" may be replaced with "sending the random access request".

S702: The terminal device sends the random access request to the network device by using the second offset value; and correspondingly, the network device receives the random access request from the terminal device.

In an implementation, the random access request may be a message 1 in a four-step random access procedure, and the message 1 may also be referred to as a preamble. In another implementation, the random access request may be a message A in a two-step random access procedure, and the message A may include a preamble and data.

In this application, the terminal device may send the random access request in advance by using the second offset value. For example, the terminal device determines to send the random access request on a first RO, and a start moment of the first RO is a first moment. The terminal device may send the random access request in advance by the second offset value. To be specific, the terminal device may send the random access request at a third moment before the first moment, and duration of an interval between the third moment and the first moment is the second offset value.

S703: The network device sends the random access response to the terminal device; and correspondingly, the terminal device receives the random access response from the network device.

In a possible implementation, the random access response may indicate the timing advance adjustment value, and the timing advance adjustment value indicated by the random access response is not less than 0. In other words, the timing advance adjustment value indicated by the random access response is greater than or equal to 0. For example, the random access response includes the TAC, and the TAC indicates the timing advance adjustment value.

In this application, the timing advance adjustment value may be used to determine a timing advance, and the timing advance is used by the terminal device to send an uplink message.

In a possible implementation, the terminal device determines the timing advance based on the timing advance adjustment value and the second offset value. For example, the terminal device may use, as the timing advance, a difference obtained by subtracting the timing advance adjustment value from the second offset value.

In a possible implementation, the terminal device may determine the timing advance based on the timing advance adjustment value indicated by the random access response, and send the uplink message based on the timing advance. For example, the terminal device may send a message such as a message 3 in the four-step random access procedure to the network device based on the timing advance.

According to the method provided in this application, factors such as the error information are considered for the second offset value determined by the terminal device, to improve accuracy of the second offset value. Further, the second offset value for which the factors such as the error information are considered is less than an existing offset value. Therefore, when the terminal device sends the random access request by using the second offset value, the timing advance adjustment value obtained by the network device based on the second offset value may be large (for example, may be greater than or equal to 0), and a case in which the timing advance adjustment value is a negative value is avoided.

In this application, the network device may alternatively indicate a timing advance less than 0. For details about how to indicate the timing advance, refer to descriptions in the following procedure.

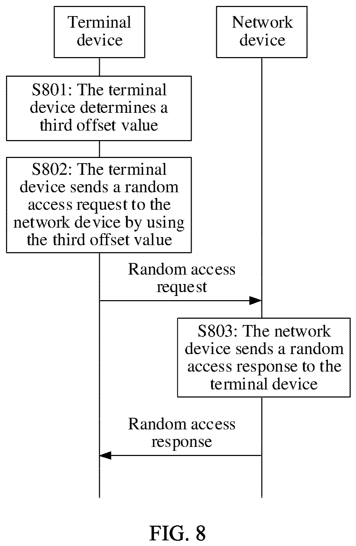

FIG. 8 is a schematic flowchart of a communication method according to an embodiment of this application.

S801: A terminal device determines a third offset value.

In this application, the third offset value is used to send a random access request in advance. The third offset value may satisfy the formula (1). For example, the third offset value is the first offset value $T_{\text{TA}}$ in the formula (1). For details, refer to the descriptions in the formula (1). Details are not described herein again.

S802: The terminal device sends the random access request to a network device by using the third offset value; and correspondingly, the network device receives the random access request from the terminal device.

In an implementation, the random access request may be a message 1 in a four-step random access procedure, and the message 1 may also be referred to as a preamble. In another implementation, the random access request may be a message A in a two-step random access procedure, and the message A may include a preamble and data.

S803: The network device sends a random access response to the terminal device; and correspondingly, the terminal device receives the random access response from the network device.

In a possible implementation, the random access response indicates a timing advance adjustment value. For example, the network device may include a TAC in the random access response, and the TAC indicates the timing advance adjustment value. The timing advance adjustment value is used to determine a timing advance.

In S803, the timing advance $N_{\text{TA}}$ determined by the terminal device based on the timing advance adjustment value may be greater than or equal to 0, or may be less than 0. When the timing advance is less than 0, it indicates that the terminal device delays sending uplink data or an uplink message by time corresponding to the timing advance.

Implementation 1: A quantity of bits for indicating the timing advance adjustment value is increased, and an indication range of the timing advance adjustment value is extended to a negative number. For example, a value range of the timing advance adjustment value is: -3846, ..., -1, 0, 1, 2, ..., and 3846, that is, [-3846, 3846].

Implementation 2: A quantity of indication bits for indicating the timing advance adjustment value remains unchanged, and a bit R is added to indicate a positive or negative indication of the timing advance adjustment value. If the bit R=0, it indicates that a value of the timing advance adjustment value is a value greater than or equal to 0, or if the bit R=1, it indicates that the value of the timing advance adjustment value is a value less than or equal to 0.

Implementation 3: A formula for calculating the timing advance $N_{\text{TA}}$ is changed to $N_{\text{TA}}=a*T_A*16*64/2^{\mu}$, where $T_A$ represents the timing advance adjustment value. a={1, -1}. A specific value is indicated by using signaling of the network device, and 1 bit is used to select and indicate one of candidate values of a.

Implementation 4: A quantity of bits for indicating the timing advance adjustment value is not increased, and an indication range of the timing advance adjustment value is extended to a negative number. For example, an original value range of the timing advance adjustment value is 0, 1, 2, ..., and 3846. A value range of the timing advance adjustment value extended to a negative number is: -1923, ..., -1, 0, 1, 2, ..., and 1923, that is, [-1923, 1923].

In the foregoing method, the TAC indication range is extended, the TAC calculation formula is changed, or the positive or negative number indication is added to the TAC, so that the network device supports an indication of a negative timing advance adjustment value in the RAR. In this way, a negative timing advance can be indicated, and a network side can flexibly adjust the TAC indication range in the RAR based on a PRACH estimation result. This ensures that on the network side, a sending time sequence of a message 3 can be aligned, and the message 3 can be received and demodulated, to ensure initial access performance.

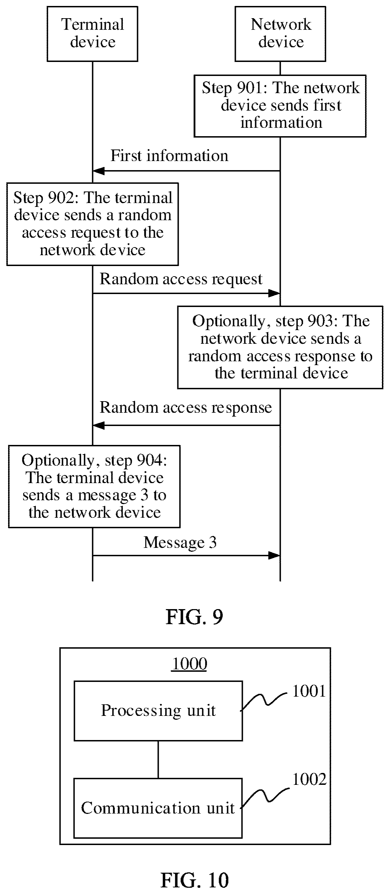

FIG. 9 is a schematic flowchart of a communication method according to an embodiment of this application.

Step 901: A network device sends first information, where the first information indicates a first value.

Correspondingly, a terminal device receives the first information from the network device.

The first value, $N_{\text{TA}}$, $N_{\text{TA,offset}}$, $N_{\text{TA,adj}}^{\text{common}}$, and $N_{\text{TA,adj}}^{\text{UE}}$ are used to determine a sending time point of an uplink message, for example, may be used to determine a sending time point of a random access request.

How the network device sends the first information is not limited in this application. For example, the network device sends an SSB, and the SSB includes the first information. Alternatively, the network device sends system information, and the system information includes the first information. The system information includes but is not limited to cell-level common information such as a SIB1, a SIB19, or other system information (Other System Information, OSI).

In this application, a value of $N_{TA}$ is determined based on an indication of the network device, or if the network device does not indicate the value of $N_{TA}$, the value of $N_{TA}$ is 0. For example, the network device may indicate the value of $N_{TA}$ by using a TAC. How the network device indicates the value of $N_{TA}$ is not limited in this application. For example, refer to the descriptions in S502. An example is not described herein again. For another example, before the terminal device sends the random access request, the network device does not indicate the value of $N_{TA}$, and the value of $N_{TA}$ is 0. For an uplink message after the random access request, the network device may indicate the value of $N_{TA}$ by using a random access response, so that the terminal device may determine the value of $N_{TA}$.

A value of $N_{TA,offset}$ is determined based on an indication of the network device, or if the network device does not indicate the value of $N_{TA,offset}$, the value of $N_{TA,offset}$ is a default value. For example, the default value of $N_{TA,offset}$ is provided in 3GPP technical specification (technical specification, TS) 38.133. How the network device indicates the value of $N_{TA,offset}$ is not limited in this application. For example, the network device indicates the value of $N_{TA,offset}$ by using a parameter n-timing advance offset (n-TimingAdvanceOffset).

A value of $N_{TA,adj}^{common}$ is determined based on a higher-layer parameter configured on a network side, or if the higher-layer parameter is not configured on the network side, the value of $N_{TA,adj}^{common}$ is 0. How the network device indicates the value of $N_{TA,adj}^{common}$ is not limited in this application. For example, if the network device configures higher-layer parameters $TA_{Common}$, $TA_{CommonDrift}$, and $TA_{CommonDriftVariation}$, the value of $N_{TA,adj}^{common}$ may be determined based on the foregoing three higher-layer parameters. For the foregoing three higher-layer parameters, refer to the descriptions in S502, or refer to related descriptions in 3GPP TS 38.331. This is not limited in this application.

For example, $Delay_{common}(t)$ is calculated based on the foregoing three higher-layer parameters according to the following formula:

$$Delay_{common}(t) = \frac{1}{2}\Big[TA_{Common} + TA_{CommonDrift} \times \big(t - t_{epoch}\big) +$$

$$TA_{CommonDriftVariation} \times \big(t - t_{epoch}\big)^2\Big].$$

A one-way propagation delay $Delay_{cmmon}(t)$ calculated according to the foregoing formula is the value of $N_{TA,adj}^{common}$.

To be specific, $Delay_{common}(t)$ may be understood as: at a time point t, a distance between a satellite and an uplink time synchronization reference point (uplink time synchronization reference point) divided by a speed of light. The satellite may be a network device that provides a service for the terminal device. $t_{epocn}$ is epoch time (epoch time) of the higher-layer parameters $TA_{Common}$, $TA_{CommonDrift}$, and $TA_{CommonDriftVariation}$. Optionally, the uplink time synchronization reference point is a point at which a downlink (downlink, DL) and an uplink (uplink, UL) are frame aligned with an offset given by $N_{TA,offset}$.

If ephemeris information of the network device is configured, $N_{TA,adj}^{UE}$ is determined based on position information of the terminal device and the ephemeris information of the network device, or if the ephemeris information of the network device is not configured, a value of $N_{TA,adj}^{UE}$ is 0. Specifically, how to determine the value of $N_{TA,adj}^{UE}$ based on the position information of the terminal device and the ephemeris information of the network device is not limited in this application. For example, refer to related descriptions in 3GPP TS 38.331, or refer to the descriptions in S502. Details are not described herein again.

In this application, the first value may be greater than or equal to 0. How the network device determines the first value is not limited in this application. For example, the network device may determine the first value based on at least one of the following:

an ephemeris calculation error, an SS timing error or a timing error, a positioning error, and an interpolation error, where for meanings of the foregoing parameters, refer to the descriptions in S502, and details are not described herein again.

For example, it is assumed that the ephemeris error is 1.4 $\mu$s, the SS timing error is 1.5 $\mu$s, the interpolation error is 0.04 $\mu$s, and the positioning error is 0.03 $\mu$s. In this case, the first value is equal to 1.4+1.5+0.04+0.03=2.97 $\mu$s.

Optionally, the network device may alternatively determine the first value based on a capability of the terminal device. For example, the network device may send a list including {UE capability, offset value}. The list may include at least one UE capability and an offset value corresponding to each UE capability. For example, the list may include {UE capability 1, offset value 1} and {UE capability 2, offset value 2}. If the capability of the terminal device is the UE capability 1, the first value is the offset value 1. If the capability of the terminal device is the UE capability 2, the first value is the offset value 2. Specifically, for a terminal device with a strong capability, if an ephemeris error, a positioning error, a timing error, an interpolation error, and the like that are calculated are all small, a total error is small, and the network device may deliver a small first value. For a terminal device with a weak capability, if an ephemeris error, a positioning error, a timing error, an interpolation error, and the like that are calculated are large, a total error is large, and the network device may deliver a large first value. In this way, a problem of occurrence of a negative TA can be avoided.

In this application, the first information may directly indicate the first value. For example, the first information includes a specific value of the first value. The terminal device may directly determine the first value based on the first information.

The first information may alternatively indirectly indicate the first value. For example, the first information includes at least one of the ephemeris calculation error, the SS timing error, the positioning error, and the interpolation error, and the terminal device may determine the first value based on content in the first information. Alternatively, the first value corresponds to one index, the first information includes the index corresponding to the first value, and the terminal device may determine the first value based on the index.

The foregoing is merely an example. How the first information specifically indicates the first value is not limited in this application.

Step 902: The terminal device sends the random access request to the network device.

The random access request is used to initiate random access, and the sending time point of the random access request is determined based on the first value.

Correspondingly, the network device receives the random access request from the terminal device.

In this application, there may be a plurality of implementations of how the terminal device determines the sending time point of the random access request based on the first value, $N_{\text{TA}}$, $N_{\text{TA,offset}}$, $N_{\text{TA,adj}}^{\text{common}}$, and $N_{\text{TA,adj}}^{\text{UE}}$. The following provides several examples.

Implementation 1: The sending time point $T_{\text{TX1}}$ of the random access request satisfies the following form:

$$T_{\text{TX1}} = T_{\text{TX2}} - T_{\text{TA3}} \cdots (11)$$

$T_{\text{TA3}}$ is determined based on the first value $N_{\text{offset2}}$, and $T_{\text{TA3}}$ may also be referred to as a fourth offset value. A specific name of $T_{\text{TA3}}$ is not limited in this application. $T_{\text{TX2}}$ represents a start time point of an RO corresponding to the random access request.

$T_{\text{TA3}}$ satisfies the following form:

$$T_{\text{TA3}} = \left( N_{\text{TA}} + N_{\text{TA,offset}} + N_{\text{TA,adj}}^{\text{common}} + N_{\text{TA,adj}}^{\text{UE}} - N_{\text{offset2}} \right) T \quad \cdots (12),$$

where the first value $N_{\text{offset2}}$ is greater than 0; or

$$T_{\text{TA3}} = \left( N_{\text{TA}} + N_{\text{TA,offset}} + N_{\text{TA,adj}}^{\text{common}} + N_{\text{TA,adj}}^{\text{UE}} + N_{\text{offset2}} \right) T \quad \cdots (13),$$

where the first value $N_{\text{offset2}}$ is less than 0.

T represents a time unit, that is, a time unit of a communication system. For example, in an NR system, T may be $T_{\text{c}}$, and $T_c = \dfrac{1}{\Delta f_{\max} \cdot N_{\text{f}}}$. $\Delta f_{\max} = 480 \cdot 10^3 \text{ Hz}$, and $N_{\text{f}}$ = 4096. In an LTE system, T may be $T_{\text{s}}$, and $T_s = \dfrac{1}{\Delta f_{\text{ref}} \cdot N_{\text{f,ref}}}$. $\Delta f_{\text{ref}} = 15 \cdot 10^3 \text{ Hz}$, and $N_{\text{f,ref}}$ = 2048.

In this implementation, the network device may send a SIB1, and the SIB1 may indicate the RO. How the SIB1 specifically indicates the RO is not limited in this application. The RO corresponding to the random access request may be understood as that the random access request is correspondingly transmitted on the RO. The RO is used to send the random access request, the RO may include a time-frequency resource used to carry the random access request, and the start time point of the RO may also be understood as a start time point of the time-frequency resource included in the RO. Correspondingly, the terminal device may determine the RO based on the SIB1.

Implementation 2: The sending time point $T_{\text{TX1}}$ of the random access request satisfies the following form:

$$T_{\text{TX1}} = T_{\text{TX2}} - (T_{\text{TA}} - N_{\text{offset2}}) \cdots (14);$$

or

$$T_{TX1} = T_{TX2} - (T_{TA} - N_{offset2} \times T) \cdots (15)$$

$N_{offset2}$ represents the first value, the first value is greater than 0, $T_{TA}$ represents a first offset value, $T_{TX2}$ represents a start time point of an RO corresponding to the random access request, and T represents a time unit.

Alternatively, the sending time point $T_{TX1}$ of the random access request satisfies the following form:

$$T_{TX1} = T_{TX2} - (T_{TA} + N_{offset2}) \cdots (16);$$

or

$$T_{TX1} = T_{TX2} - (T_{TA} + N_{offset2} \times T) \cdots (17)$$

$N_{offset2}$ represents the first value, the first value is less than 0, $T_{TA}$ represents a first offset value, $T_{TX2}$ represents a start time point of an RO corresponding to the random access request, and T represents a time unit.

In Implementation 2, the first offset value $T_{TA}$ may satisfy the following form:

$$T_{TA} = \left( N_{TA} + N_{TA,offset} + N_{TA,adj}^{common} + N_{TA,adj}^{UE} \right) T \cdots (18)$$

For meanings of the foregoing parameters, refer to the descriptions of the parameters included in the formula (1) in S502. Details are not described herein again.

Optionally, step 903: The network device sends the random access response to the terminal device.

Correspondingly, the terminal device receives the random access response from the network device. The random access response is a message in response to the random access request.

In a possible implementation, the random access response includes a timing advance adjustment value. Optionally, the timing advance adjustment value is greater than or equal to 0. For example, the network device may include a TAC in the random access response, and the TAC indicates the timing advance adjustment value. The timing advance adjustment value may be used to determine a timing advance, and the timing advance is used by the terminal device to send the uplink message. How the network device specifically indicates the timing advance adjustment value is not limited in this application.

Correspondingly, the terminal device determines the timing advance based on the timing advance adjustment value. For example, in a first implementation, the terminal device may use, as the timing advance, a difference obtained by subtracting the timing advance adjustment value from the fourth offset value $T_{TA3}$. That is, the timing advance $T_{TA4}$ may satisfy the following form:

$$T_{TA4} = T_{TA3} - N_{TA} \cdots (19)$$

$N_{TA}$ represents the timing advance adjustment value.

In a second implementation, the terminal device may determine the timing advance based on the timing advance adjustment value, the first offset value, and the first value. For example, the timing advance $T_{TA4}$ may satisfy the following form:

$$T_{TA4} = (T_{TA} - N_{offset2}) - N_{TA} \cdots (20),$$

where the first value $N_{offset2}$ is greater than 0; or

$$T_{TA4} = (T_{TA} + N_{offset2}) - N_{TA} \cdots (21),$$

where the first value $N_{offset2}$ is less than 0.

The foregoing is merely an example. There may further be another manner of determining the timing advance, and details are not described herein again.

Optionally, step 904: The terminal device sends a message 3 to the network device.

Correspondingly, the network device receives the message 3. The message 3 may be a message 3 in a four-step random access procedure. The message 3 may alternatively be an RRC setup request (RRCSetupRequest) message in an RRC setup process. The message 3 may alternatively be an RRC resume request (RRCResumeRequest) message in an RRC resume process, or an RRC reestablishment request (RRCReestablishmentRequest) message in an RRC reestablishment process.

The terminal device may send the message 3 based on the timing advance. For example, the terminal device may determine a sending time point of the message 3 based on the timing advance.

Alternatively, the terminal device may send, based on the timing advance, a sending time point of another uplink message to the network device. Examples are not described herein one by one.

After step 904, there may be another message. For example, the network device sends a message 4. This is not limited in this application, and examples are not described one by one.

Currently, because the sending time point of the random access request is estimated by the terminal device, the random access request may be sent prematurely or excessively late, and alignment cannot be implemented with the network side. As a result, data demodulation fails, and access performance is affected. However, according to the foregoing method, the network device indicates the first value to the terminal device, and when sending the random access request, the terminal device may determine the sending time point of the random access request based on the first value, so that the terminal device can accurately determine the sending time point of the random access request, and the sending time point of the random access request can be aligned with the network side, to increase a data demodulation success rate on the network side and improve access performance.

In the foregoing embodiments provided in this application, the methods provided in embodiments of this application are separately described from a perspective of interaction between devices. To implement functions in the methods provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, division into modules is an example, and is merely logical function division. During actual implementation, there may be another division manner. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 10, an embodiment of this application further provides a communication apparatus 1000, configured to implement functions of the network device or the terminal device in the foregoing methods. For example, the communication apparatus may be a software module or a chip system. In this embodiment of this application, the chip system may include a chip, or may include a chip and another discrete component. The communication apparatus 1000 may include a processing unit 1001 and a communication unit 1002.

In this embodiment of this application, the communication unit may also be referred to as a transceiver unit, and may include a sending unit and/or a receiving unit, which are respectively configured to perform sending and receiving steps performed by the network device or the terminal device in the foregoing method embodiments.

The following describes in detail communication apparatuses provided in embodiments of this application with reference to FIG. 10 to FIG. 12. It should be understood that descriptions of apparatus embodiments correspond to the descriptions of the method embodiments. Therefore, for content that is not described in detail, refer to the foregoing method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. The communication unit may also include the sending unit and the receiving unit. The sending unit may also be sometimes referred to as a transmitter machine, a transmitter, a transmitter circuit, or the like. The receiving unit may also be sometimes referred to as a receiver machine, a receiver, a receiver circuit, or the like. The sending unit and the receiving unit may be one integrated unit, or may be two independent units.

In an implementation, the communication apparatus 1000 may perform the following functions.

The processing unit is configured to: determine a first offset value, and decrease the first offset value, where the first offset value is used to send a random access request in advance.

The communication unit is configured to: send the random access request to the network device by using a decreased first offset value, where a timing advance adjustment value indicated by a random access response corresponding to the random access request sent by using the decreased first offset value is greater than or equal to 0; and receive the random access response from the network device.

In an implementation, the communication apparatus 1000 may perform the following functions.

The communication unit is configured to receive a random access request from the terminal device, where the random access request is sent by using a decreased first offset value, and the first offset value is used to send the random access request in advance.

The processing unit is configured to send a random access response to the terminal device based on the random access request through the communication unit, where a timing advance adjustment value indicated by the random access response is greater than or equal to 0.

In an implementation, the communication apparatus 1000 may perform the following functions.

The processing unit is configured to determine a second offset value based on position information of the terminal device and ephemeris information of the network device.

The communication unit is configured to: send a random access request to the network device by using the second offset value, and receive a random access response from the network device, where a timing advance adjustment value indicated by the random access response is not less than 0, or the timing advance adjustment value indicated by the random access response is greater than or equal to 0.

In an implementation, the communication apparatus 1000 may perform the following functions.

The processing unit is configured to determine a second offset value based on position information of the terminal device, ephemeris information of the network device, and error information, where the error information is determined based on at least one of an ephemeris calculation error, a synchronization signal timing error, a positioning error, and an interpolation error.

The communication unit is configured to send a random access request to the network device by using the second offset value.

In an implementation, the communication apparatus 1000 may perform the following functions.

The communication unit is configured to receive a random access request from the terminal device, where the random access request is sent by using a second offset value, the second offset value is determined based on position information of the terminal device, ephemeris information of the network device, and error information, and the error information is determined based on at least one of an ephemeris calculation error, a synchronization signal timing error, a positioning error, and an interpolation error.

The processing unit is configured to send a random access response to the terminal device based on the random access request through the communication unit.

In an implementation, the communication apparatus 1000 may perform the following functions.

The processing unit is configured to receive first information from the network device through the communication unit, where the first information indicates a first value.

The processing unit is configured to send a random access request to the network device through the communication unit, where a sending time point of the random access request is determined based on the first value, $N_{\mathrm{TA}}$, $N_{\mathrm{TA,offset}}$, $N_{\mathrm{TA,adj}}^{\mathrm{common}}$ and $N_{\mathrm{TA,adj}}^{\mathrm{UE}}$ ; a value of $N_{\mathrm{TA}}$ is determined based on an indication of the network device, or if the network device does not indicate the value of $N_{\mathrm{TA}}$, the value of $N_{\mathrm{TA}}$ is 0; a value of $N_{\mathrm{TA,offset}}$ is determined based on an indication of the network device, or if the network device does not indicate the value of $N_{\mathrm{TA,offset}}$, the value of $N_{\mathrm{TA,offset}}$ is a default value; a value of $N_{\mathrm{TA,adj}}^{\mathrm{common}}$ is determined based on a higher-layer parameter configured on a network side, or if the higher-layer parameter is not configured on the network side, the value of $N_{\mathrm{TA,adj}}^{\mathrm{common}}$ is 0; and if ephemeris information of the network device is configured, $N_{\mathrm{TA,adj}}^{\mathrm{UE}}$ is determined based on position information of the terminal device and the ephemeris information of the network device, or if the ephemeris information of the network device is not configured, a value of $N_{\mathrm{TA,adj}}^{\mathrm{UE}}$ is 0.

In an implementation, the communication apparatus 1000 may perform the following functions:

sending first information, where the first information indicates a first value; the first value, $N_{\mathrm{TA}}$, $N_{\mathrm{TA,offset}}$, $N_{\mathrm{TA,adj}}^{\mathrm{common}}$ , and $N_{\mathrm{TA,adj}}^{\mathrm{UE}}$ are used to determine a sending time point of a random access request; a value of $N_{\mathrm{TA}}$ is determined based on an indication of the network device, or if the network device does not indicate the value of $N_{\mathrm{TA}}$, the value of $N_{\mathrm{TA}}$ is 0; a value of $N_{\mathrm{TA,offset}}$ is determined based on an indication of the network device, or if the network device does not indicate the value of $N_{\mathrm{TA,offset}}$, the value of $N_{\mathrm{TA,offset}}$ is a default value; a value of $N_{\mathrm{TA,adj}}^{\mathrm{common}}$ is determined based on a higher-layer parameter configured on a network side, or if the higher-layer parameter is not configured on the network side, the value of $N_{\mathrm{TA,adj}}^{\mathrm{common}}$ is 0; and if ephemeris information of the network device is configured, $N_{\mathrm{TA,adj}}^{\mathrm{UE}}$

is determined based on position information of the terminal device and the ephemeris information of the network device, or if the ephemeris information of the network device is not configured, a value of $N_{\mathrm{TA,adj}}^{\mathrm{UE}}$ is 0; and receiving the random access request from the terminal device.

The foregoing is merely an example. The processing unit 1001 and the communication unit 1002 may further perform other functions. For more detailed descriptions, refer to related descriptions in the foregoing method embodiments. Details are not described herein again.

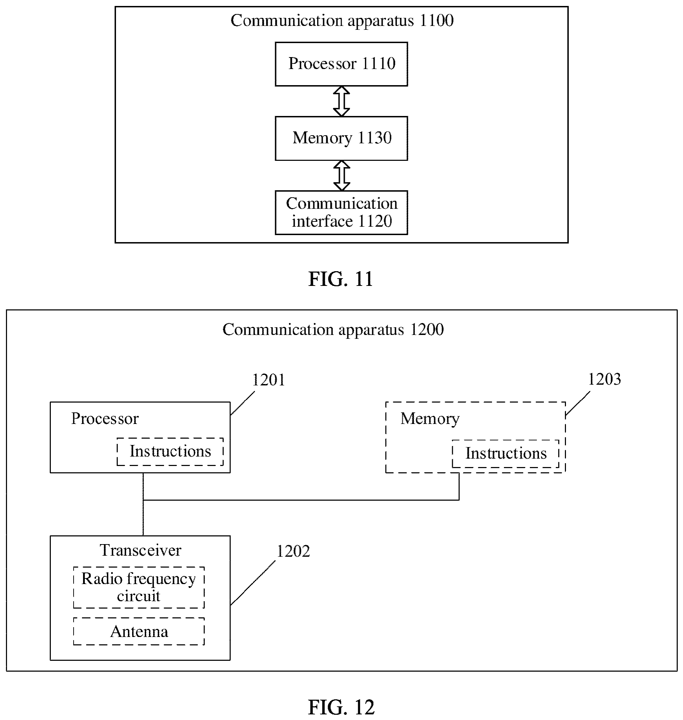

FIG. 11 shows a communication apparatus 1100 according to an embodiment of this application. The apparatus shown in FIG. 11 may be an implementation of a hardware circuit of the apparatus shown in FIG. 10. The communication apparatus is applicable to the foregoing flowcharts, and performs functions of the network device or the terminal device in the foregoing method embodiments. For ease of description, FIG. 11 shows only main components of the communication apparatus.

As shown in FIG. 11, the communication apparatus 1100 includes a processor 1110 and a communication interface 1120. The processor 1110 and the communication interface 1120 are coupled to each other. It may be understood that the communication interface 1120 may be a transceiver or an input/output interface. Optionally, the communication apparatus 1100 may further include a memory 1130, configured to: store instructions executed by the processor 1110, store input data needed by the processor 1110 to run the instructions, or store data generated after the processor 1110 runs the instructions.

When the communication apparatus 1100 is configured to implement the foregoing methods, the processor 1110 is configured to implement a function of the processing unit 1001, and the communication interface 1120 is configured to implement a function of the communication unit 1002.

When the communication apparatus is a chip used in the terminal device, the chip of the terminal device implements the functions of the terminal device in the foregoing method embodiments. The chip of the terminal device receives information from another module (for example, a radio frequency module or an antenna) in the terminal device. Alternatively, the chip of the terminal device sends information to another module (for example, a radio frequency module or an antenna) in the terminal device.

In another possible product form, the terminal device or the network device in embodiments of this application may be implemented by using a general bus architecture. For ease of description, FIG. 12 is a diagram of a structure of a communication apparatus 1200 according to an embodiment of this application. The communication apparatus 1200 includes a processor 1201 and a transceiver 1202. The communication apparatus 1200 may be a terminal device, or a chip or a chip system in the terminal device. Alternatively, the communication apparatus 1200 may be a network device, or a chip or a module in the network device. FIG. 12 shows only main components of the communication apparatus 1200. In addition to the processor 1201 and the transceiver 1202, the communication apparatus 1200 may further include a memory 1203 and an input/output apparatus (not shown in the figure).

Optionally, the processor 1201 is mainly configured to: process a communication protocol and communication data, control the entire communication apparatus, execute a software program, and process data of the software program. The memory 1203 is mainly configured to store the software program and data. The transceiver 1202 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user.

Optionally, the processor 1201, the transceiver 1202, and the memory 1203 may be connected through a communication bus.

After the communication apparatus is powered on, the processor 1201 may read the software program in the memory 1203, interpret and execute instructions of the software program, and process the data of the software program. When data needs to be sent wirelessly, the processor 1201 performs baseband processing on the to-be-sent data, and then outputs a baseband signal to the radio frequency circuit. The radio frequency circuit performs radio frequency processing on the baseband signal, and then sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1201. The processor 1201 converts the baseband signal into data, and processes the data.

In another implementation, the radio frequency circuit and the antenna may be disposed independent of the processor for baseband processing. For example, in a distributed scenario, the radio frequency circuit and the antenna may be disposed remotely and independent of the communication apparatus.

In some embodiments, in hardware implementation, a person skilled in the art may figure out that the communication apparatus 1000 may be in a form of the communication apparatus 1200 shown in FIG. 12.

In an example, a function/implementation process of the processing unit 1001 in FIG. 10 may be implemented by the processor 1201 in the communication apparatus 1200 shown in FIG. 12 by invoking computer-executable instructions stored in the memory 1203. A function/implementation process of the communication unit 1002 in FIG. 10 may be implemented by the transceiver 1202 in the communication apparatus 1200 shown in FIG. 12.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to the processor, so that the processor can read information from the storage medium and can write information into the storage medium. It is clear that the storage medium may alternatively be a component of the processor. The processor and the storage medium may be disposed in an ASIC. In addition, the ASIC may be located in a network device or a terminal device. Alternatively, the processor and the storage medium may exist in a network device or a terminal device as discrete components.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus configured to implement a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope of the claims of this application and equivalent technologies thereof.

**Claims**

1. A communication method, comprising:

   determining a first offset value, wherein the first offset value is used to send a random access request in advance;
   decreasing the first offset value, and sending the random access request to a network device by using a decreased first offset value, wherein a timing advance adjustment value indicated by a random access response corresponding to the random access request sent by using the decreased first offset value is greater than or equal to 0; and
   receiving the random access response from the network device.

2. The method according to claim 1, wherein the decreased first offset value satisfies the following form:

$$T_{\mathrm{TA1}} = \left(N_{\mathrm{TA}} + N_{\mathrm{TA,offset}} + N_{\mathrm{TA,adj}}^{\mathrm{common}} + N_{\mathrm{TA,adj}}^{\mathrm{UE}} - N_{\mathrm{offset}}\right)T,$$

wherein

$T_{\mathrm{TA1}}$ represents the decreased first offset value, and a value of $N_{\mathrm{TA}}$ is determined based on an indication of the network device, or if the network device does not indicate the value of $N_{\mathrm{TA}}$, the value of $N_{\mathrm{TA}}$ is 0; a value of $N_{\mathrm{TA,offset}}$ is determined based on an indication of the network device, or if the network device does not indicate the value of $N_{\mathrm{TA,offset}}$, the value of $N_{\mathrm{TA,offset}}$ is a default value; a value of $N_{\mathrm{TA,adj}}^{\mathrm{common}}$ is determined based on a higher-layer parameter configured on a network side, or if the higher-layer parameter is not configured on the network side, the value of $N_{\mathrm{TA,adj}}^{\mathrm{common}}$ is 0; T represents a time unit; if ephemeris information of the network device is configured, $N_{\mathrm{TA,adj}}^{\mathrm{UE}}$ is determined based on position information of a terminal device and the ephemeris information of the network device, or if the ephemeris information of the network device is not configured, a value of $N_{\mathrm{TA,adj}}^{\mathrm{UE}}$ is 0; and $N_{\mathrm{offset}}$ is error information, and $N_{\mathrm{offset}}$ is greater than 0.

3. The method according to claim 2, wherein a value of the error information $N_{\mathrm{offset}}$ is indicated by the network device.

4. The method according to claim 2 or 3, wherein the error information is determined based on at least one of the following:

   an ephemeris calculation error, wherein the ephemeris calculation error is an error generated when position information of the network device is determined based on the ephemeris information;
   a timing error, wherein the timing error is an error generated when a delay between the terminal device and the network device is determined based on the position information of the terminal device and the ephemeris information of the network device;
   a positioning error, wherein the positioning error is an error generated when the position information of the terminal device is determined; and
   an interpolation error, wherein the interpolation error is an error generated when the position information of the terminal device and/or the ephemeris information of the network device are/is calculated in an interpolation manner.

5. The method according to any one of claims 1 to 4, wherein the random access response indicates the timing advance adjustment value, and the method further comprises:
   determining a timing advance based on the timing advance adjustment value and the decreased first offset value, wherein the timing advance is used to send an uplink message.

6. A communication method, comprising:

   receiving a random access request from a terminal device, wherein the random access request is sent by using a decreased first offset value, and the first offset value is used to send the random access request in advance; and
   sending a random access response to the terminal device based on the random access request, wherein a timing advance adjustment value indicated by the random access response is greater than or equal to 0.

7. A communication method, comprising:

   determining a second offset value based on position information of the terminal device and ephemeris information of a network device;
   sending a random access request to the network device by using the second offset value; and
   receiving a random access response from the network device, wherein a timing advance adjustment value indicated by the random access response is not less than 0.

8. The method according to claim 7, wherein the second offset value satisfies the following form:

$$T_{\text{TA2}} = \left(N_{\text{TA}} + N_{\text{TA,offset}} + N_{\text{TA,adj}}^{\text{common}} + N_{\text{TA,adj2}}^{\text{UE}}\right)T,$$

wherein

T represents a time unit, $T_{\text{TA2}}$ represents the second offset value, and a value of $N_{\text{TA}}$ is determined based on an indication of the network device, or the value is 0; a value of $N_{\text{TA,offset}}$ is determined based on an indication of the network device, or if the network device does not indicate the value of $N_{\text{TA,offset}}$, the value is a default value; if a higher-layer parameter is configured, $N_{\text{TA,adj}}^{\text{common}}$ is determined based on the higher-layer parameter, or if the higher-layer parameter is not configured, a value of $N_{\text{TA,adj}}^{\text{common}}$ is 0; and if the ephemeris information of the network device is configured, $N_{\text{TA,adj2}}^{\text{UE}}$ is calculated based on the position information of the terminal device and the ephemeris information of the network device, or if the ephemeris information of the network device is not configured, a value of $N_{\text{TA,adj2}}^{\text{UE}}$ is 0.

9. The method according to claim 7 or 8, wherein in an initial access phase, the terminal device determines $T_{\text{TA2}}$ based on $N_{\text{TA,adj2}}^{\text{UE}}$ that is calculated based on the position information of the terminal device and the ephemeris information of the network device, and sends the random access request in advance by using $T_{\text{TA2}}$, and the terminal device expects that after the random access request is sent by using $T_{\text{TA2}}$, the timing advance adjustment value received in the random access response is not less than 0.

10. The method according to claim 7, wherein determining the second offset value based on the position information of the terminal device and the ephemeris information of the network device comprises:

   determining the second offset value based on the position information of the terminal device, the ephemeris information of the network device, and error information, wherein the error information is determined based on at least one of an ephemeris calculation error, a synchronization signal timing error, a positioning error, and an interpolation error.

11. The method according to claim 10, wherein the second offset value satisfies the following form:

$$T_{\text{TA2}} = \left(N_{\text{TA}} + N_{\text{TA,offset}} + N_{\text{TA,adj}}^{\text{common}} + N_{\text{TA,adj}}^{\text{UE}} - N_{\text{offset}}\right)T,$$

wherein

$T_{\text{TA2}}$ represents the second offset value, and a value of $N_{\text{TA}}$ is determined based on an indication of the network device, or the value is 0; a value of $N_{\text{TA,offset}}$ is determined based on an indication of the network device, or if the network device does not indicate the value of $N_{\text{TA,offset}}$, the value is a default value; if a higher-layer parameter is configured, $N_{\text{TA,adj}}^{\text{common}}$ is determined based on the higher-layer parameter, or if the higher-layer parameter is not configured, a value of $N_{\text{TA,adj}}^{\text{common}}$ is 0; if the ephemeris information of the network device is configured, $N_{\text{TA,adj}}^{\text{UE}}$ is calculated based on the position information of the terminal device and the ephemeris information of the network device, or if the ephemeris information of the network device is not configured, a value of $N_{\text{TA,adj}}^{\text{UE}}$ is 0; and $N_{\text{offset}}$ is the error information, and $N_{\text{offset}}$ is greater than 0.

12. The method according to claim 11, wherein a value of the error information $N_{\text{offset}}$ is indicated by the network device.

13. The method according to claim 8, wherein $N_{\text{TA,adj2}}^{\text{UE}}$ satisfies either of the following forms:

$$N_{\text{TA,adj2}}^{\text{UE}} = N_{\text{TA,adj}}^{\text{UE}} - \text{b} \ \text{or} \ N_{\text{TA,adj2}}^{\text{UE}} = N_{\text{TA,adj}}^{\text{UE}} \times \delta,$$

wherein

$N_{\mathrm{TA,adj}}^{\mathrm{UE}}$ is determined based on the position information and the ephemeris information, b and δ are determined based on the error information, b is greater than 0, and δ is greater than 0 and less than 1.

14. The method according to any one of claims 11 to 13, wherein the ephemeris calculation error is an error generated when position information of the network device is determined based on the ephemeris information;

the synchronization signal timing error is an error generated when synchronization signal timing between the terminal device and the network device is determined based on the position information of the terminal device and the ephemeris information of the network device;
the positioning error is an error generated when the position information of the terminal device is determined; and
the interpolation error is an error generated when the position information of the terminal device and/or the ephemeris information of the network device are/is calculated in an interpolation manner.

15. A communication method, comprising:

receiving a random access request from a terminal device, wherein the random access request is sent by using a second offset value, and the second offset value is determined based on position information of the terminal device and ephemeris information of a network device; and
sending a random access response to the terminal device based on the random access request, wherein a timing advance adjustment value indicated by the random access response is not less than 0.

16. A communication method, comprising:

receiving first information from a network device, wherein the first information indicates a first value; and
sending a random access request to the network device, wherein a sending time point of the random access request is determined based on the first value, $N_{\mathrm{TA}}$, $N_{\mathrm{TA,offset}}$, $N_{\mathrm{TA,adj}}^{\mathrm{common}}$, and $N_{\mathrm{TA,adj}}^{\mathrm{UE}}$; a value of $N_{\mathrm{TA}}$ is determined based on an indication of the network device, or if the network device does not indicate the value of $N_{\mathrm{TA}}$, the value of $N_{\mathrm{TA}}$ is 0; a value of $N_{\mathrm{TA,offset}}$ is determined based on an indication of the network device, or if the network device does not indicate the value of $N_{\mathrm{TA,offset}}$, the value of $N_{\mathrm{TA,offset}}$ is a default value; a value of $N_{\mathrm{TA,adj}}^{\mathrm{common}}$ is determined based on a higher-layer parameter configured on a network side, or if the higher-layer parameter is not configured on the network side, the value of $N_{\mathrm{TA,adj}}^{\mathrm{common}}$ is 0; and if ephemeris information of the network device is configured, $N_{\mathrm{TA,adj}}^{\mathrm{UE}}$ is determined based on position information of the terminal device and the ephemeris information of the network device, or if the ephemeris information of the network device is not configured, a value of $N_{\mathrm{TA,adj}}^{\mathrm{UE}}$ is 0.

17. The method according to claim 16, wherein the sending time point $T_{\mathrm{TX1}}$ of the random access request satisfies the following form:

$$T_{\mathrm{TX1}} = T_{\mathrm{TX2}} - T_{\mathrm{TA3}},$$

wherein

$T_{\mathrm{TA3}}$ is determined based on the first value $N_{\mathrm{offset2}}$, $N_{\mathrm{TA}}$, $N_{\mathrm{TA,offset}}$, $N_{\mathrm{TA,adj}}^{\mathrm{common}}$, and $N_{\mathrm{TA,adj}}^{\mathrm{UE}}$, and $T_{\mathrm{TX2}}$ represents a start time point of a random access channel occasion corresponding to the random access request.

18. The method according to claim 17, wherein $T_{\mathrm{TA3}}$ satisfies the following form:

$$T_{\mathrm{TA3}} = \left( N_{\mathrm{TA}} + N_{\mathrm{TA,offset}} + N_{\mathrm{TA,adj}}^{\mathrm{common}} + N_{\mathrm{TA,adj}}^{\mathrm{UE}} - N_{\mathrm{offset2}} \right) T$$, wherein the first value $N_{\mathrm{offset2}}$ is greater than 0; or

$$T_{TA3} = \left(N_{TA} + N_{TA,offset} + N_{TA,adj}^{common} + N_{TA,adj}^{UE} + N_{offset2}\right)T$$, wherein the first value $N_{offset2}$ is less than 0, wherein

T represents a time unit.

19. The method according to claim 16, wherein the sending time point $T_{TX1}$ of the random access request satisfies the following form:

$$T_{TX1}=T_{TX2}-(T_{TA}-N_{offset2}) \text{ or } T_{TX1}=T_{TX2}-(T_{TA}-N_{offset2}\times T),$$

wherein
$N_{offset2}$ represents the first value, the first value is greater than 0, $T_{TA}$ represents a first offset value, $T_{TA}$ is determined based on $N_{TA}$, $N_{TA,offset}$, $N_{TA,adj}^{common}$, and $N_{TA,adj}^{UE}$, $T_{TX2}$ represents a start time point of a random access channel occasion corresponding to the random access request, and T represents a time unit.

20. The method according to claim 16, wherein the sending time point $T_{TX1}$ of the random access request satisfies the following form:

$$T_{TX1}=T_{TX2}-(T_{TA}+N_{offset2}) \text{ or } T_{TX1}=T_{TX2}-(T_{TA}+N_{offset2}\times T),$$

wherein
$N_{offset2}$ represents the first value, the first value is less than 0, $T_{TA}$ represents a first offset value, $T_{TA}$ is determined based on $N_{TA}$, $N_{TA,offset}$, $N_{TA,adj}^{common}$, and $N_{TA,adj}^{UE}$, $T_{TX2}$ represents a start time point of a random access channel occasion corresponding to the random access request, and T represents a time unit.

21. The method according to any one of claims 16 to 20, wherein the first value is determined based on at least one of the following:

an ephemeris calculation error, wherein the ephemeris calculation error is an error generated when position information of the network device is determined based on the ephemeris information;
a timing error, wherein the timing error is an error generated when a delay between the terminal device and the network device is determined based on the position information of the terminal device and the ephemeris information of the network device;
a positioning error, wherein the positioning error is an error generated when the position information of the terminal device is determined; and
an interpolation error, wherein the interpolation error is an error generated when the position information of the terminal device and/or the ephemeris information of the network device are/is calculated in an interpolation manner.

22. The method according to any one of claims 16 to 21, wherein the method further comprises:
receiving a random access response from the network device, wherein the random access response indicates a timing advance adjustment value.

23. The method according to claim 22, wherein the timing advance adjustment value is greater than or equal to 0.

24. The method according to claim 22 or 23, wherein the method further comprises:
determining a timing advance based on the timing advance adjustment value and the first value, wherein the timing advance is used to send an uplink message.

25. A communication method, comprising:

sending first information, wherein the first information indicates a first value; the first value, $N_{TA}$, $N_{TA,offset}$, $N_{TA,adj}^{common}$, and $N_{TA,adj}^{UE}$ are used to determine a sending time point of a random access request; a value of

$N_{TA}$ is determined based on an indication of the network device, or if the network device does not indicate the value of $N_{TA}$, the value of $N_{TA}$ is 0; a value of $N_{TA,offset}$ is determined based on an indication of the network device, or if the network device does not indicate the value of $N_{TA,offset}$, the value of $N_{TA,offset}$ is a default value; a value of $N_{TA,adj}^{common}$ is determined based on a higher-layer parameter configured on a network side, or if the higher-layer parameter is not configured on the network side, the value of $N_{TA,adj}^{common}$ is 0; and if ephemeris information of the network device is configured, $N_{TA,adj}^{UE}$ is determined based on position information of the terminal device and the ephemeris information of the network device, or if the ephemeris information of the network device is not configured, a value of $N_{TA,adj}^{UE}$ is 0; and

receiving the random access request from the terminal device.

26. The method according to claim 25, wherein the sending time point $T_{TX1}$ of the random access request satisfies the following form:

$$T_{TX1} = T_{TX2} - T_{TA3},$$

wherein

$T_{TA3}$ is determined based on the first value $N_{offset2}$, $N_{TA}$, $N_{TA,offset}$, $N_{TA,adj}^{common}$, and $N_{TA,adj}^{UE}$, and $T_{TX2}$ represents a start time point of a random access channel occasion corresponding to the random access request; and

$T_{TA3}$ satisfies the following form:

$$T_{TA3} = \left(N_{TA} + N_{TA,offset} + N_{TA,adj}^{common} + N_{TA,adj}^{UE} - N_{offset2}\right)T,$$

wherein the first value $N_{offset2}$ is greater than 0; or

$$T_{TA3} = \left(N_{TA} + N_{TA,offset} + N_{TA,adj}^{common} + N_{TA,adj}^{UE} + N_{offset2}\right)T,$$

wherein the first value $N_{offset2}$ is less than 0, wherein
T represents a time unit.

27. The method according to claim 26, wherein $T_{TA3}$ satisfies the following form:

$$T_{TA3} = \left(N_{TA} + N_{TA,offset} + N_{TA,adj}^{common} + N_{TA,adj}^{UE} - N_{offset2}\right)T,$$

wherein the first value $N_{offset2}$ is greater than 0; or

$$T_{TA3} = \left(N_{TA} + N_{TA,offset} + N_{TA,adj}^{common} + N_{TA,adj}^{UE} + N_{offset2}\right)T,$$

wherein the first value $N_{offset2}$ is less than 0, wherein
T represents the time unit.

28. The method according to claim 25, wherein the sending time point $T_{TX1}$ of the random access request satisfies the following form:

$$T_{TX1} = T_{TX2} - \left(T_{TA} - N_{offset2}\right) \text{ or } T_{TX1} = T_{TX2} - \left(T_{TA} - N_{offset2} \times T\right),$$

wherein

$N_{\text{offset2}}$ represents the first value, the first value is greater than 0, $T_{\text{TA}}$ represents a first offset value, $T_{\text{TA}}$ is determined based on $N_{\text{TA}}$, $N_{\text{TA,offset}}$, $N_{\text{TA,adj}}^{\text{common}}$, and $N_{\text{TA,adj}}^{\text{UE}}$, $T_{\text{TX2}}$ represents a start time point of a random access channel occasion corresponding to the random access request, and T represents a time unit; or the sending time point $T_{\text{TX1}}$ of the random access request satisfies the following form:

$$T_{\text{TX1}}=T_{\text{TX2}}-(T_{\text{TA}}+N_{\text{offset2}}) \text{ or } T_{\text{TX1}}=T_{\text{TX2}}-(T_{\text{TA}}+N_{\text{offset2}}\times T),$$

wherein

$N_{\text{offset2}}$ represents the first value, the first value is less than 0, $T_{\text{TA}}$ represents a first offset value, $T_{\text{TA}}$ is determined based on $N_{\text{TA}}$, $N_{\text{TA,offset}}$, $N_{\text{TA,adj}}^{\text{common}}$, and $N_{\text{TA,adj}}^{\text{UE}}$, and $T_{\text{TX2}}$ represents a start time point of a random access channel occasion corresponding to the random access request.

29. The method according to claim 25, wherein the sending time point $T_{\text{TX1}}$ of the random access request satisfies the following form:

$$T_{\text{TX1}}=T_{\text{TX2}}-(T_{\text{TA}}+N_{\text{offset2}}) \text{ or } T_{\text{TX1}}=T_{\text{TX2}}-(T_{\text{TA}}+N_{\text{offset2}}\times T),$$

wherein

$N_{\text{offset2}}$ represents the first value, the first value is less than 0, $T_{\text{TA}}$ represents a first offset value, $T_{\text{TA}}$ is determined based on $N_{\text{TA}}$, $N_{\text{TA,offset}}$, $N_{\text{TA,adj}}^{\text{common}}$, and $N_{\text{TA,adj}}^{\text{UE}}$, $T_{\text{TX2}}$ represents a start time point of a random access channel occasion corresponding to the random access request, and T represents a time unit.

30. The method according to any one of claims 25 to 29, wherein the first value is determined based on at least one of the following:

an ephemeris calculation error, wherein the ephemeris calculation error is an error generated when position information of the network device is determined based on the ephemeris information;
a timing error, wherein the timing error is an error generated when a delay between the terminal device and the network device is determined based on the position information of the terminal device and the ephemeris information of the network device;
a positioning error, wherein the positioning error is an error generated when the position information of the terminal device is determined; and
an interpolation error, wherein the interpolation error is an error generated when the position information of the terminal device and/or the ephemeris information of the network device are/is calculated in an interpolation manner.

31. The method according to any one of claims 25 to 30, wherein the method further comprises:
sending a random access response to the terminal device, wherein the random access response indicates a timing advance adjustment value.

32. The method according to claim 31, wherein the timing advance adjustment value is greater than or equal to 0.

33. A communication apparatus, comprising:

a processing unit, configured to: determine a first offset value, and decrease the first offset value, wherein the first offset value is used to send a random access request in advance; and
a communication unit, configured to: send the random access request to a network device by using a decreased first offset value, wherein a timing advance adjustment value indicated by a random access response corresponding to the random access request sent by using the decreased first offset value is greater than or equal to 0; and receive the random access response from the network device.

34. The apparatus according to claim 33, wherein the decreased first offset value satisfies the following form:

$$T_{TA1} = \left(N_{TA} + N_{TA,offset} + N_{TA,adj}^{common} + N_{TA,adj}^{UE} - N_{offset}\right)T,$$

wherein

$T_{TA1}$ represents the decreased first offset value, and a value of $N_{TA}$ is determined based on an indication of the network device, or if the network device does not indicate the value of $N_{TA}$, the value of $N_{TA}$ is 0; a value of $N_{TA,offset}$ is determined based on an indication of the network device, or if the network device does not indicate the value of $N_{TA,offset}$, the value of $N_{TA,offset}$ is a default value; a value of $N_{TA,adj}^{common}$ is determined based on a higher-layer parameter configured on a network side, or if the higher-layer parameter is not configured on the network side, the value of $N_{TA,adj}^{common}$ is 0; T represents a time unit; if ephemeris information of the network device is configured, $N_{TA,adj}^{UE}$ is determined based on position information of a terminal device and the ephemeris information of the network device, or if the ephemeris information of the network device is not configured, a value of $N_{TA,adj}^{UE}$ is 0; and $N_{offset}$ is error information, and $N_{offset}$ is greater than 0.

35. The apparatus according to claim 34, wherein the error information is determined based on at least one of the following:

   an ephemeris calculation error, wherein the ephemeris calculation error is an error generated when position information of the network device is determined based on the ephemeris information;
   a timing error, wherein the timing error is an error generated when a delay between the terminal device and the network device is determined based on the position information of the terminal device and the ephemeris information of the network device;
   a positioning error, wherein the positioning error is an error generated when the position information of the terminal device is determined; and
   an interpolation error, wherein the interpolation error is an error generated when the position information of the terminal device and/or the ephemeris information of the network device are/is calculated in an interpolation manner.

36. The apparatus according to any one of claims 33 to 35, wherein the random access response indicates the timing advance adjustment value, and the processing unit is further configured to:
determine a timing advance based on the timing advance adjustment value and the decreased first offset value, wherein the timing advance is used to send an uplink message.

37. A communication apparatus, comprising:

   a communication unit, configured to receive a random access request from a terminal device, wherein the random access request is sent by using a decreased first offset value, and the first offset value is used to send the random access request in advance; and
   a processing unit, configured to send a random access response to the terminal device based on the random access request through the communication unit, wherein a timing advance adjustment value indicated by the random access response is greater than or equal to 0.

38. A communication apparatus, comprising:

   a processing unit, configured to determine a second offset value based on position information of a terminal device and ephemeris information of a network device; and
   a communication unit, configured to: send a random access request to the network device by using the second offset value, and receive a random access response from the network device, wherein a timing advance adjustment value indicated by the random access response is not less than 0.

39. The apparatus according to claim 38, wherein the second offset value satisfies the following form:

$$T_{TA2} = \left(N_{TA} + N_{TA,offset} + N_{TA,adj}^{common} + N_{TA,adj2}^{UE}\right)T,$$

wherein

T represents a time unit, $T_{TA2}$ represents the second offset value, and a value of $N_{TA}$ is determined based on an indication of the network device, or the value is 0; a value of $N_{TA,offset}$ is determined based on an indication of the network device, or if the network device does not indicate the value of $N_{TA,offset}$, the value is a default value; if a higher-layer parameter is configured, $N_{TA,adj}^{common}$ is determined based on the higher-layer parameter, or if the higher-layer parameter is not configured, a value of $N_{TA,adj}^{common}$ is 0; and if the ephemeris information of the network device is configured, $N_{TA,adj2}^{UE}$ is calculated based on the position information of the terminal device and the ephemeris information of the network device, or if the ephemeris information of the network device is not configured, a value of $N_{TA,adj2}^{UE}$ is 0.

40. The apparatus according to claim 38 or 39, wherein in an initial access phase, $T_{TA2}$ is determined based on $N_{TA,adj2}^{UE}$ that is calculated based on the position information of the terminal device and the ephemeris information of the network device, the random access request is sent in advance by using $T_{TA2}$, and the terminal device expects that after the random access request is sent by using $T_{TA2}$, the timing advance adjustment value received in the random access response is not less than 0.

41. The apparatus according to claim 38, wherein the processing unit is specifically configured to:
determine the second offset value based on the position information of the terminal device, the ephemeris information of the network device, and error information, wherein the error information is determined based on at least one of an ephemeris calculation error, a synchronization signal timing error, a positioning error, and an interpolation error.

42. The apparatus according to claim 41, wherein the second offset value satisfies the following form:

$$T_{TA2} = \left(N_{TA} + N_{TA,offset} + N_{TA,adj}^{common} + N_{TA,adj}^{UE} - N_{offset}\right)T,$$

wherein

$T_{TA2}$ represents the second offset value, and a value of $N_{TA}$ is determined based on an indication of the network device, or the value is 0; a value of $N_{TA,offset}$ is determined based on an indication of the network device, or if the network device does not indicate the value of $N_{TA,offset}$, the value is a default value; if a higher-layer parameter is configured, $N_{TA,adj}^{common}$ is determined based on the higher-layer parameter, or if the higher-layer parameter is not configured, a value of $N_{TA,adj}^{common}$ is 0; if the ephemeris information of the network device is configured, $N_{TA,adj}^{UE}$ is calculated based on the position information of the terminal device and the ephemeris information of the network device, or if the ephemeris information of the network device is not configured, a value of $N_{TA,adj}^{UE}$ is 0; and $N_{offset}$ is the error information, and $N_{offset}$ is greater than 0.

43. The apparatus according to claim 39, wherein $N_{TA,adj2}^{UE}$ satisfies either of the following forms:

$$N_{TA,adj2}^{UE} = N_{TA,adj}^{UE} - b \text{ or } N_{TA,adj2}^{UE} = N_{TA,adj}^{UE} \times \delta,$$

wherein

$N_{TA,adj}^{UE}$ is determined based on the position information and the ephemeris information, b and $\delta$ are determined based on the error information, b is greater than 0, and $\delta$ is greater than 0 and less than 1.

44. The apparatus according to any one of claims 41 to 43, wherein the ephemeris calculation error is an error generated when position information of the network device is determined based on the ephemeris information;

the synchronization signal timing error is an error generated when synchronization signal timing between the terminal device and the network device is determined based on the position information of the terminal device and the ephemeris information of the network device;

the positioning error is an error generated when the position information of the terminal device is determined; and the interpolation error is an error generated when the position information of the terminal device and/or the ephemeris information of the network device are/is calculated in an interpolation manner.

45. A communication apparatus, comprising:

a communication unit, configured to receive a random access request from a terminal device, wherein the random access request is sent by using a second offset value, and the second offset value is determined based on position information of the terminal device and ephemeris information of a network device; and

a processing unit, configured to send a random access response to the terminal device based on the random access request through the communication unit, wherein a timing advance adjustment value indicated by the random access response is not less than 0.

46. A communication apparatus, comprising:

a processing unit, configured to receive first information from a network device through a communication unit, wherein the first information indicates a first value, wherein

the processing unit is configured to send a random access request to the network device through the communication unit, wherein a sending time point of the random access request is determined based on the first value, $N_{\text{TA}}$, $N_{\text{TA,offset}}$, $N_{\text{TA,adj}}^{\text{common}}$, and $N_{\text{TA,adj}}^{\text{UE}}$; a value of $N_{\text{TA}}$ is determined based on an indication of the network device, or if the network device does not indicate the value of $N_{\text{TA}}$, the value of $N_{\text{TA}}$ is 0; a value of $N_{\text{TA,offset}}$ is determined based on an indication of the network device, or if the network device does not indicate the value of $N_{\text{TA,offset}}$, the value of $N_{\text{TA,offset}}$ is a default value; a value of $N_{\text{TA,adj}}^{\text{common}}$ is determined based on a higher-layer parameter configured on a network side, or if the higher-layer parameter is not configured on the network side, the value of $N_{\text{TA,adj}}^{\text{common}}$ is 0; and if ephemeris information of the network device is configured, $N_{\text{TA,adj}}^{\text{UE}}$ is determined based on position information of the terminal device and the ephemeris information of the network device, or if the ephemeris information of the network device is not configured, a value of $N_{\text{TA,adj}}^{\text{UE}}$ is 0.

47. The apparatus according to claim 46, wherein the sending time point $T_{\text{TX1}}$ of the random access request satisfies the following form:

$$T_{\text{TX1}} = T_{\text{TX2}} - T_{\text{TA3}},$$

wherein

$T_{\text{TA3}}$ is determined based on the first value $N_{\text{offset2}}$, $N_{\text{TA}}$, $N_{\text{TA,offset}}$, $N_{\text{TA,adj}}^{\text{common}}$, and $N_{\text{TA,adj}}^{\text{UE}}$, and $T_{\text{TX2}}$ represents a start time point of a random access channel occasion corresponding to the random access request.

48. The apparatus according to claim 47, wherein $T_{\text{TA3}}$ satisfies the following form:

$$T_{\text{TA3}} = \left( N_{\text{TA}} + N_{\text{TA,offset}} + N_{\text{TA,adj}}^{\text{common}} + N_{\text{TA,adj}}^{\text{UE}} - N_{\text{offset2}} \right) T,$$

wherein the first value $N_{\text{offset2}}$ is greater than 0; or

$$T_{\text{TA3}} = \left( N_{\text{TA}} + N_{\text{TA,offset}} + N_{\text{TA,adj}}^{\text{common}} + N_{\text{TA,adj}}^{\text{UE}} + N_{\text{offset2}} \right) T,$$

wherein the first value $N_{\text{offset2}}$ is less than 0, wherein
T represents a time unit.

**49.** The apparatus according to claim 46, wherein the sending time point $T_{TX1}$ of the random access request satisfies the following form:

$$T_{TX1}=T_{TX2}-(T_{TA}-N_{offset2}) \text{ or } T_{TX1}=T_{TX2}-(T_{TA}-N_{offset2}\times T),$$

wherein
$N_{offset2}$ represents the first value, the first value is greater than 0, $T_{TA}$ represents a first offset value, $T_{TA}$ is determined based on $N_{TA}$, $N_{TA,offset}$, $N_{TA,adj}^{common}$, and $N_{TA,adj}^{UE}$, $T_{TX2}$ represents a start time point of a random access channel occasion corresponding to the random access request, and T represents a time unit.

**50.** The apparatus according to claim 46, wherein the sending time point $T_{TX1}$ of the random access request satisfies the following form:

$$T_{TX1}=T_{TX2}-(T_{TA}+N_{offset2}) \text{ or } T_{TX1}=T_{TX2}-(T_{TA}+N_{offset2}\times T),$$

wherein
$N_{offset2}$ represents the first value, the first value is less than 0, $T_{TA}$ represents a first offset value, $T_{TA}$ is determined based on $N_{TA}$, $N_{TA,offset}$, $N_{TA,adj}^{common}$, and $N_{TA,adj}^{UE}$, $T_{TX2}$ represents a start time point of a random access channel occasion corresponding to the random access request, and T represents a time unit.

**51.** A communication apparatus, comprising:

a processing unit, configured to send first information through a communication unit, wherein the first information indicates a first value; the first value, $N_{TA}$, $N_{TA,offset}$, $N_{TA,adj}^{common}$, and $N_{TA,adj}^{UE}$ are used to determine a sending time point of a random access request; a value of $N_{TA}$ is determined based on an indication of the network device, or if the network device does not indicate the value of $N_{TA}$, the value of $N_{TA}$ is 0; a value of $N_{TA,offset}$ is determined based on an indication of the network device, or if the network device does not indicate the value of $N_{TA,offset}$, the value of $N_{TA,offset}$ is a default value; a value of $N_{TA,adj}^{common}$ is determined based on a higher-layer parameter configured on a network side, or if the higher-layer parameter is not configured on the network side, the value of $N_{TA,adj}^{common}$ is 0; and if ephemeris information of the network device is configured, $N_{TA,adj}^{UE}$ is determined based on position information of the terminal device and the ephemeris information of the network device, or if the ephemeris information of the network device is not configured, a value of $N_{TA,adj}^{UE}$ is 0, wherein the processing unit is configured to receive the random access request from the terminal device through the communication unit.

**52.** A communication apparatus, comprising a processor and a memory, wherein the processor is configured to execute a computer program or instructions stored in the memory, to enable the communication apparatus to implement the method according to any one of claims 1 to 32.

**53.** A computer-readable storage medium, storing a computer program or instructions, wherein when the computer program or the instructions are run on a computer, the computer is enabled to implement the method according to any one of claims 1 to 32.

**54.** A chip, comprising a processor, wherein the processor is coupled to a memory, and is configured to execute a computer program or instructions stored in the memory, to enable the chip to implement the method according to any one of claims 1 to 32.

**55.** A computer program product, storing computer-readable instructions, wherein when a communication apparatus reads and executes the computer-readable instructions, the communication apparatus is enabled to perform the method according to any one of claims 1 to 32.

First network
device

Feeder link

Service
link

Terminal
device

Second network
device

Coverage range

FIG. 1

RAN

UE

Base
station

CN

Uu

NG

Satellite

NTN gateway

RRU

FIG. 2

FIG. 3

FIG. 4

```
┌─────────────┐                    ┌─────────────┐
│  Terminal   │                    │  Network    │
│  device     │                    │  device     │
└─────────────┘                    └─────────────┘
```

S501: The terminal device determines a first offset value, and decreases the first offset value

S502: The terminal device sends a random access request to the network device by using a decreased first offset value

Random access request →

S503: The network device sends a random access response to the terminal device

← Random access response

**FIG. 5**

Network device

First time point    Third time point    Fifth time point                    Eighth time point

SSB        SIB1        SIB19        Random access request        Random access response

Terminal device

Second time point    Fourth time point    Sixth time point    Seventh time point

**FIG. 6**

```
┌──────────┐                    ┌──────────┐
│ Terminal │                    │ Network  │
│  device  │                    │  device  │
└────┬─────┘                    └────┬─────┘
     │                               │
┌────┴─────────────────┐             │
│ S701: The terminal   │             │
│ device determines a  │             │
│ second offset value  │             │
│ based on position    │             │
│ information of the   │             │
│ terminal device and  │             │
│ ephemeris information │             │
│ of the network device│             │
└────┬─────────────────┘             │
┌────┴─────────────────┐             │
│ S702: The terminal   │             │
│ device sends a random│             │
│ access request to the│             │
│ network device by    │             │
│ using the second     │             │
│ offset value         │             │
└────┬─────────────────┘             │
     │      Random access            │
     │        request                │
     │──────────────────────────────▶│
     │              ┌────────────────┴──┐
     │              │ S703: The network │
     │              │ device sends a    │
     │              │ random access     │
     │              │ response to the   │
     │              │ terminal device   │
     │              └────────────────┬──┘
     │      Random access            │
     │        response               │
     │◀──────────────────────────────│
     │                               │
```

FIG. 7

```
┌──────────┐              ┌──────────┐
│ Terminal │              │ Network  │
│  device  │              │  device  │
└────┬─────┘              └────┬─────┘
     │                         │
┌────┴──────────────┐          │
│ S801: The terminal│          │
│ device determines a          │
│ third offset value│          │
└────┬──────────────┘          │
     │                         │
┌────┴──────────────┐          │
│ S802: The terminal│          │
│ device sends a random        │
│ access request to the        │
│ network device by using      │
│ the third offset value       │
└────┬──────────────┘          │
     │   Random access         │
     │     request             │
     │────────────────────────▶│
     │                  ┌───────┴────────┐
     │                  │ S803: The network
     │                  │ device sends a random
     │                  │ access response to the
     │                  │ terminal device │
     │                  └───────┬────────┘
     │   Random access          │
     │     response             │
     │◀─────────────────────────│
     │                          │
```

FIG. 8

Terminal device

Network device

Step 901: The network device sends first information

First information

Step 902: The terminal device sends a random access request to the network device

Random access request

Optionally, step 903: The network device sends a random access response to the terminal device

Random access response

Optionally, step 904: The terminal device sends a message 3 to the network device

Message 3

FIG. 9

1000

Processing unit                1001

Communication unit          1002

FIG. 10

Communication apparatus 1100

Processor 1110

$\updownarrow$

Memory 1130

$\updownarrow$

Communication interface 1120

FIG. 11

Communication apparatus 1200

1201

Processor

Instructions

1203

Memory

Instructions

Transceiver

1202

Radio frequency circuit

Antenna

FIG. 12

## INTERNATIONAL SEARCH REPORT

| International application No. |
|---|
| **PCT/CN2024/078539** |

### A.     CLASSIFICATION OF SUBJECT MATTER

H04W 74/08(2024.01)i

According to International Patent Classification (IPC) or to both national classification and IPC

### B.     FIELDS SEARCHED

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 卫星, 非地面, 非陆地, 定时, 提前, 同步, 偏移, 随机接入, 调整, 减少, 降低, 负数, 负值, 非负, 特定, 公共, 误差, 位置, 星历, satellite, NTN, timing, advance, TA, synchronization, PRACH, offset, adjust, update, negative, positive, specific, common, error, position, ephemeris

### C.     DOCUMENTS CONSIDERED TO BE RELEVANT

| Category* | Citation of document, with indication, where appropriate, of the relevant passages | Relevant to claim No. |
|---|---|---|
| X | MODERATOR (THALES). "FL Summary on Enhancements on UL Time and Frequency Synchronization for NR NTN" *3GPP TSG-RAN WG1 Meeting #104-e, R1-2101871*, 27 January 2021 (2021-01-27), text, sections 1.1-1.4 | 1-55 |
| A | CN 111867041 A (CHINA MOBILE COMMUNICATION LTD., RESEARCH INSTITUTE et al.) 30 October 2020 (2020-10-30) entire document | 1-55 |
| A | CN 113271167 A (HUAWEI TECHNOLOGIES CO., LTD.) 17 August 2021 (2021-08-17) entire document | 1-55 |
| A | WO 2022236542 A1 (GUANGDONG OPPO MOBILE COMMUNICATIONS CO., LTD.) 17 November 2022 (2022-11-17) entire document | 1-55 |
| A | KR 20200127865 A (ELECTRONICS AND TELECOMMUNICATIONS RESEARCH INSTITUTE) 11 November 2020 (2020-11-11) entire document | 1-55 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 May 2024** | **22 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/078539**

| Patent document cited in search report | | | Publication date (day/month/year) | Patent family member(s) | Publication date (day/month/year) |
|---|---|---|---|---|---|
| CN | 111867041 | A | 30 October 2020 | None | |
| CN | 113271167 | A | 17 August 2021 | None | |
| WO | 2022236542 | A1 | 17 November 2022 | None | |
| KR | 20200127865 | A | 11 November 2020 | None | |

Form PCT/ISA/210 (patent family annex) (July 2022)

**REFERENCES CITED IN THE DESCRIPTION**

**Patent documents cited in the description**

- CN 202310227957

- CN 202311665086